# EUROPEAN PATENT SPECIFICATION

(11) **EP 1 024 876 B1**
(45) Date of publication and mention of the grant of the patent: **16.06.2004**
(21) Application number: 98935899.9
(22) Date of filing: 22.07.1998
(51) Int. Cl.: B01D 35/02, B01D 27/08

(54) **SPIN-ON FLUID FILTER ASSEMBLY**
ANSCHRAUBBARE FLUIDFILTERVORRICHTUNG
ENSEMBLE FILTRE AMOVIBLE A LIQUIDE

(30) Priority: 24.07.1997 US 899561; 24.07.1997 US 899588; 24.07.1997 US 899686; 24.07.1997 US 900025
(43) Date of publication of application: 09.08.2000
(73) Proprietor: FLEETGUARD, INC., Nashville, Tennessee 32717 (US)
(72) Inventor: DEMIRDOGEN, Caner, A., Cookeville, TN 38506 (US); BOUNNAKHOM, Alan, S., Cookeville, TN 38506 (US); MILLER, Paul, D., Cookeville, TN 38501 (US); LANIUS, Mike, B., Baxter, TN 38544 (US); SUITER, Dwight, S., Cookeville, TN 38501 (US); PARDUE, Byron, A., Cookeville, TN 38506 (US)
(74) Representative: Everitt, Christopher James Wilders
(86) International application number: PCT/US1998/015125
(87) International publication number: WO 1999/004879

(56) References cited:
- US-A- 3 204 771
- US-A- 5 342 511
- US-A- 5 490 930
- US-A- 5 525 226

## Description

### BACKGROUND OF THE INVENTION

The present invention relates to a unitary nutplate for a fluid filter assembly for providing a mounting interface between an engine block mounting base and the remainder of the fluid filter assembly, the fluid filter assembly being constructed and arranged to receive a flow of incoming oil to be filtered by a filtering element and to discharge that oil downstream of the filtering element and relates in general to the design of a fluid filter assembly including such a nutplate for threaded attachment to a filter head. The anticipated use for the present invention is in cooperation with a vehicle engine such as a diesel engine.

A related embodiment of the present invention is directed to the spin-on filter and the filter head interface. More specifically, this related embodiment includes a design relationship for the specific sequence of thread and seal (inner and outer) engagements between the fluid filter and the filter head in order to facilitate easier installation.

While the design of fluid filters over the years has involved literally hundreds of different concepts, the basic principles of operation have remained much the same. The fluid substance to be filtered must first be introduced into the filter housing or shell and from there directed to flow into and through the filtering media. As the filtered fluid exits from the filtering media, it needs to be routed to a flow outlet. Throughout this flow loop, it is generally preferred that the unfiltered fluid not by-pass the filtering media and that fluid not leak from the filter shell. While these functions can normally be achieved by the use of properly designed and positioned seals, over time seals deteriorate and leakage can occur. The passage of time and continued use can also cause deterioration of other components and interfaces within the fluid filter. For example, each pulse of fluid pressure creates a variable load on the nutplate causing it to flex. The flexing of the nutplate creates wear in the plate and weakens nutplate interfaces and deterioration begins. In particular, the flexing causes the outer seal to deflect which in turn can create a leakage interface. To some extent the rate of deterioration is affected by the operating environment and the nature of the substance being filtered. If a longer service interval is desired for the filter assembly, it is important to be able to slow the rate of deterioration.

In order to provide a representative sampling of earlier fluid filter assembly designs, the following listed patents should be considered:

| PATENT NO. | PATENTEE | ISSUE DATE |
|---|---|---|
| US-A- | | |
| 4,841,628 | Nagle | Jun. 27, 1989 |
| 4,839,037 | Bertelsen et al. | Jun. 13, 1989 |
| 4,855,047 | Firth | Aug. 8, 1989 |
| 5,118,417 | Deibel | Jun. 2, 1992 |
| 5,548,893 | Koelfgen | Aug.27, 1996 |
| 4,992,166 | Lowsky et al. | Feb. 12, 1991 |
| 5,171,430 | Beach et al. | Dec. 15, 1992 |
| 5,395,518 | Gulsvig | Mar. 7, 1995 |
| 4,052,307 | Humbert, Jr. | Oct. 4, 1977 |
| 1,033,858 | Adams | Jul. 30, 1912 |
| 2,646,886 | Le Clair | Jul. 28, 1953 |
| 2,743,019 | Kovacs | Apr. 24, 1956 |
| 3,859,216 | Sisson et al. | Jan. 7, 1975 |
| 5,300,223 | Wright | Apr. 5, 1994 |
| 5,445,734 | Chen | Aug. 29, 1995 |
| 1,647,799 | Hammer | Nov. 1, 1927 |
| 3,204,771 | Baldwin | Sep. 7, 1965 |
| 5,342,511 | Brown et al. | Aug. 30, 1994 |
| 5,525,226 | Brown et al. | Jun, 11, 1996 |
| 5,490,930 | Krull | Feb. 13, 1996 |

US-A-5,490,930 for example, discloses a unitary natplate for a fluid filter assembly for providing a mounting interface between an engine block mounting base and the remainder of the fluid filter assembly, the fluid filter assembly being constructed and arranged to receive a flow of incoming oil to be filtered by a filtering element and to discharge that oil downstream of the filtering element, the unitary nutplate comprising a first annular wall portion constructed and arranged to be attached to an outer shell of the fluid assembly, and a second annular wall portion constructed and arranged to be located radially inwardly of said first annular wall portion, said second annular wall portion being internally threaded for threadedly mounting onto an engine block mounting base.In common with US-A-5,490,930, a primary object of the present invention is to enable a reduction in the number of components used in a fluid filter assembly and thereby to reduce cost.

In those diesel engine filter designs which employ an internally threaded nutplate, such as US-A-3,204,771; US-A-5,342,511; US-A-5,525,226 and US-A-5,490,930, one of the design concerns is the type and level of vibration which the filter assembly sees in its actual use environment. In a typical installation, the fluid filter assembly is threadedly attached to a mounting base or filter head as is shown in US-A-3,204,771. The filter head typically provides the flow passages for the incoming (unfiltered) fluid as well as a flow passage for the exiting (filtered) fluid. An externally threaded, hollow stem is typically used in order to threadedly mate with an internally threaded aperture in the nutplate. Since the threaded stem is hollow, it is constructed and arranged to function as an exit flow passage or conduit.

Vibrations due to engine operation and those coming from road conditions are transmitted to the fluid filter assembly by means of the filter mounting base and the threaded stem. The distance from the outside diameter of the threaded stem to the filter housing (i.e., shell) defines a moment arm about which the filter assembly is able to move. The greater the length of the moment arm, the greater the amplitude of the transmitted vibrations and the greater the rate of deterioration of the seals of the fluid filter assembly and in turn the greater the rate of deterioration of the filter assembly. Vibrations of the type described also have a deterioration effect on the seals, the nutplate and other structural components of the fluid filter. In order to increase the useful life of the fluid filter assembly, it would be desirable to reduce the length of the moment arm. This is accomplished in a preferred embodiment of the present invention by increasing the size of the internally threaded aperture in the nutplate so that the nutplate has a threaded aperture which is larger, compared to that of earlier designs, and in turn by providing an internally-threaded mounting portion with an increased outside diameter.

By employing a nutplate with the same outside diameter an increase in the inside diameter size reduces the radial thickness or width of the nutplate sidewall and in turn reduces the available area which can be used for drilling, moulding, or otherwise incorporating fluid flow holes. The inside and outside diameters of the nutplate define the sidewall which has an annular ring shape. While flow holes could conceivably be provided in this annular ring area, each flow hole would, by necessity, have to be quite small. In order to have enough flow area for adequate and efficient flow through the fluid filter, a relatively large number of these smaller holes is required. As the number of holes increases, the spacing between holes decreases and this would significantly weaken the nutplate. Consequently, a modified design needs to be provided for the nutplate and for the cooperating filter seals in order to provide for the necessary flow of unfiltered fluid into the fluid filter assembly. These modified designs are provided by the present invention in a novel and unobvious manner.

According to one aspect of this invention there is provided a fluid filter assembly as claimed in claim 1.

Preferred features of the unitary nutplate of the fluid filter assembly of this aspect of this invention are claimed in the sub-claims 2 to 18.

According to another aspect of this invention there is provided a unitary nutplate as claimed in claim 19.

A preferred feature of the unitary nutplate of this aspect of this invention is claimed in sub-claim 20.

Included in the disclosed of fluid filter assembly which embodies the present invention are novel inner and outer seals which provide improved performance characteristics.

As will be described, there are four different inner seals disclosed in order to cooperate with the various nutplate embodiments of the present invention.

The nutplate designs of the present invention are disclosed in various arrangements and for each one there is a specifically styled inner seal. Each inner seal design is positioned over the end of the filtering element and around an exit flow conduit which is part of the engine block mounting base. One style of inner seal cooperates with one style of nutplate of the primary embodiment in order to create flow passageways therebetween through alternating open sections in the seal. In the other style of inner seal , the flow passageways which are defined between the nutplate and the inner seal are created by the use of depending projections from the lower wall of the nutplate.

Otherwise, the two inner seals function in a similar fashion. In the related embodiment of the fluid filter, one style of inner seal cooperates with the mounting base and radial flow areas are created between the nutplate and the filter element. The other style of inner seal for this related embodiment includes its own flow passageways as well as cooperating with the nutplate for the creation of radial flow areas.

The outer seal provides a sealed interface between the mounting base and the outer shell which is formed over the upper annular portion of the nutplate, outward of the location of the threaded connection. The outer seal is uniquely styled with a pair of circumferential ribs for sealing redundancy. The outer seal also helps to dampen vibrations which may be transmitted by the mounting base. The cooperation of the inner and outer seals with the nutplate styles of the present invention provides an improved fluid filter assembly.

The installation of spin-on filters typically calls for one-half to one turn installation following outer-gasket first contact. This point of first contact is difficult to determine if the fluid filter is designed with a positive inner seal to avoid bypass flow during use. The difficulty arises because the inner seal typically makes contact before the outer seal, causing a resistance to turning of the filter, far greater than the friction of gasket first contact. Also, due to the wide tolerance stack up of the filter assembly, the inner seal must make contact very early in the assembly such that it also makes contact before the first thread is engaged, thereby making it difficult to prevent cross threading. Removal of the fluid filter is also difficult because the end user must break loose the outer seal and the inner seal at the same time. Separating this breakaway point for each seal reduces the difficulty of filter removal.

The basic concept of a spin-on filter requires that a fully assembled filter be a stand alone unit, ready to use, only altered by gasket compression and filling of liquid as it is installed for use. If this concept is varied by recognizing that the filter is always used in conjunction with a filter head, then it is possible to allow the head to become part of the inner filter assembly during installation. Recognition of this allows several improvements to the typical spin-on filter assembly, as provided by the present invention. A typical spin-on filter has a spring in the bottom of the filter to press the filtering element tightly against the bottom of the nutplate. This spring takes up tolerance variations in the total assembly. Better quality filters are equipped with an inner seal to ensure that clean and dirty fluids are kept separate. This is typically a radial seal. Tolerance stack up of the distance between the lip of the inner seal and the top of the outer seal can be considerable. Adding this to the tolerance of the filter head between the bottom of the outer gasket and the inner seal surface requires that the protrusion on the head for the inner radial seal be longer than nominally required by the design to ensure that the radial inner seal is fully engaged under the worst tolerance conditions. Also, the radial inner seal requires.much greater radial compression than is normally required to allow for the considerable lack of concentricity control inherent in the construction of spin-on filters. This tight radial compression coupled with the longer protrusion of the filter head inner radial seal surface challenges the filter designer to provide for the thread engagement before the considerable torque drag of the inner seal mechanism comes into play. Height requirements of the filter assembly usually compromise this situation.

However, if one recognizes that the filter element is already floating in the fluid filter assembly on a spring, this can be used to advantage as is claimed in the sub-claims 13 to 20. A protrusion on the filter head can be designed to push the element down during installation, separating it from the nutplate and the rest of the nutplate end shell assembly. This protrusion can either press on the centre of the top of the inner radial seal where it rests on the element top plate, just outside the inner radial seal protrusion on the head, or near the outer edge of the inner radial seal where it rests on the element top plate, just inside the thread minor diameter on the nutplate. This approach removes all concentricity issues as the element is now free to float and align itself to the inner radial seal. This means that the inner radial seal will not require as much radial compression. The tolerance of the lip of the inner radial seal need now be controlled by only one dimension, the level of the top of the inner radial seal to the edge of the lip. The radial seal protrusion on the head can now be located and tolerated by one dimension, the distance from the surface that bears on the inner radial seal to the end of the protrusion. This allows the protrusion to be much shorter.

By means of a preferred embodiment of the present invention, once the head surface that bears on the inner radial seal is in full contact, the radial inner seal is fully engaged. At this point, the filtering element becomes part of the filter head and the rest of the filter nutplate and shell assembly can rotate around it, using the spring in the bottom of the filter as a thrust bearing. If desired, a separate thrust bearing can be added beneath the spring to ensure the lowest possible friction. From this point on, the radial flow area of the filter assembly can be set by the relationship of the head surface that bears on the inner radial seal to the rest of the head. It becomes much easier for the end user to feel outer seal first contact. More accurate outer seal compression ensures a better seal and discourages over tightening. Over tightening of the outer seal may lead to greater difficulty when removing the filter from the filter head, later.

When the end user removes the filter, the increased accuracy of the installation, coupled with the need to only break the outer seal loose, makes the initial turning of the fluid filter much easier. The threads on the nutplate act as a screw press to pull the inner seal out of the filtering element. Since the inner radial seal does not require as much radial compression, it is easier to break this seal loose after use.

This preferred embodiment of the present invention enables existing filter designs to be improved upon by getting away from the concept that the filter assembly must be "ready to use" as a stand alone unit. This, of course, is never the actual situation since the filter must always be installed on a filter head before it can be used. This preferred embodiment of the present invention allows the filter head to adjust to the assembly during installation. Thread alignment is done first. Thread engagement is made next. The inner seal is next fully engaged. Once fully engaged, the inner seal no longer spins and the filter shell spins around the element and the inner seal portion of the filter head, using the spring in the bottom of the filter as a thrust bearing. The filter head next opens the flow area of the filter by pushing the filter element down against the support spring. Finally, with only the friction of the threads and the support spring to resist turning, the point of outer seal first contact can be easily determined, allowing for more accurate compression of the outer seal.

Otherwise, the two inner seals function in a similar fashion. In the related embodiment of the fluid filter, one style of inner seal cooperates with the mounting base and radial flow areas are created between the nutplate and the filter element. The other style of inner seal for this related embodiment includes its own flow passageways as well as cooperating with the nutplate for the creation of radial flow areas.

The outer seal provides a sealed interface between the mounting base and the outer shell which is formed over the upper annular portion of the nutplate, outward of the location of the threaded connection. The outer seal is uniquely styled with a pair of circumferential ribs for sealing redundancy. The outer seal also helps to dampen vibrations which may be transmitted by the mounting base. The cooperation of the inner and outer seals with the nutplate styles of the present invention provides an improved fluid filter assembly.

A spin-on filter assembly according to one embodiment of the present invention includes in combination a filter head constructed and arranged with an externally threaded annular outer wall and an annular inner wall defining a flow opening and including an annular protruding portion and a bearing surface which is positioned radially outward of the protruding portion and a fluid filter comprising an enclosing outer shell, a filtering element positioned within the enclosing outer shell, and defining therewith an annular clearance space, a support spring axially positioned between the enclosing outer shell and the filtering element, a unitary nutplate assembled to the enclosing outer shell, the nutplate having an annular sidewall which defines a threaded mounting portion for assembly to the filter head, an inner seal positioned between the nutplate and the filtering element and defining a hollow interior, an outer seal positioned between the filter head and the nutplate and wherein the threaded assembly of the nutplate onto the filter head positions the protruding portion in the hollow interior with the bearing surface abutting against the inner seal causing the support spring to be compressed, thereby allowing the filtering element to move axially away from the nutplate so as to define a radial flow path between the inner seal and the nutplate.

According to related embodiments of the present invention the unitary nutplate is free of any flow passageways and includes an outer lip portion which is designed to be attached to the outer shell. The outer lip portion having an outer surface and the threaded mounting portion having an outer surface which is radially inwardly of the outer surface of the outer lip portion. The outer seal includes a pair of spaced-apart ribs which provides a sealing interface against the filter head. The inner seal cooperates with the nutplate to provide a plurality of flow paths between the inner seal and the nutplate between the filter head and the annular clearance space.

One object of the present invention is to provide an improved spin-on fluid filter assembly.

Related objects and advantages of the present invention will be apparent from the following description.

### BRIEF DESCRIPTION OF THE DRAWINGS

FIG. 1 is a front elevational view in full section of a fluid filter assembly according to a typical embodiment of the present invention.
FIG. 2 is a front elevational view in full section of the FIG. 1 fluid filter assembly as mounted on an engine block mounting base according to the present invention.
FIG. 3 is a top plan view of the FIG. 2 engine block mounting base with the FIG. 1 fluid filter assembly attached.
FIG. 4 is a front elevational view of a unitary nutplate according to a typical embodiment of the present invention.
FIG. 5 is a front elevational view in full section of the FIG. 4 nutplate.
FIG. 6 is a perspective view of an inner seal which comprises one portion of the FIG. 1 fluid filter assembly.
FIG. 7 is a front elevational view in full section of the FIG. 6 inner seal.
FIG. 8 is a bottom plan view of an outer seal which comprises one portion of the FIG. 1 filter assembly.
FIG. 9 is a front elevational view in full section of the FIG. 8 outer seal.
FIG. 10 is an enlarged, partial, front elevational view of the sidewall of the FIG. 8 outer seal.
FIG. 11 is a front elevational view in full section of an alternative fluid filter assembly according to another embodiment of the present invention.
FIG. 12 is a front elevational view in full section of the FIG. 11 fluid filter assembly as assembled onto an engine block mounting base.
FIG. 13 is a top plan view of the FIG. 12 engine block mounting base with the FIG. 11 fluid filter assembly attached.
FIG. 14 is a front elevational view of a nutplate which comprises one portion of the FIG. 11 fluid filter assembly.
FIG. 15 is a front elevational view in full section of the FIG. 14 nutplate.
FIG. 16 is a perspective view of an inner seal which comprises one portion of the FIG. 11 fluid filter assembly.
FIG. 17 is a front elevational view in full section of the FIG. 16 inner seal.
FIG. 18 is a partial front elevational view in full section of a fluid filter according to another embodiment of the present invention.
FIG. 19 is a front elevational view in full section of a filter head to which the FIG. 18 fluid filter is assembled according to the present invention.
FIG. 20 is a partial, front elevational view in full section of the FIG. 18 fluid filter as assembled onto the FIG. 19 filter head according to the present invention.
FIG. 21 is a front elevational view in full section of the FIG. 20 partial view.
FIG. 22 is a perspective view of an inner seal comprising one portion of the FIG. 18 fluid filter.
FIG. 23 is a front elevational view in full section of the FIG. 22 inner seal.
FIG. 24 is a perspective view of the underside of the FIG. 19 filter head according to the present invention.
FIG. 25 is a partial front elevational view in full section of a fluid filter according to another embodiment of the present invention.
FIG. 26 is a front elevational view in full section of a filter head to which the FIG. 25 fluid filter is assembled according to the present invention.
FIG. 27 is a partial, front elevational view in full section of the FIG. 25 fluid filter as assembled onto the FIG. 26 filter head according to the present invention.
FIG. 28 is a front elevational view in full section of the FIG. 27 partial view.
FIG. 29 is a perspective view of an inner seal comprising one portion of the FIG. 25 fluid filter.
FIG. 30 is a front elevational view in full section of the FIG. 29 inner seal.
FIG. 31 is a perspective view of the underside of the FIG. 26 filter head according to the present invention.

### DESCRIPTION OF THE PREFERRED EMBODIMENT

For the purposes of promoting an understanding of the principles of the invention, reference will now be made to the embodiment illustrated in the drawings and specific language will be used to describe the same. It will nevertheless be understood that no limitation of the scope of the invention is thereby intended, such alterations and further modifications in the illustrated device, and such further applications of the principles of the invention as illustrated therein being contemplated as would normally occur to one skilled in the art to which the invention relates.

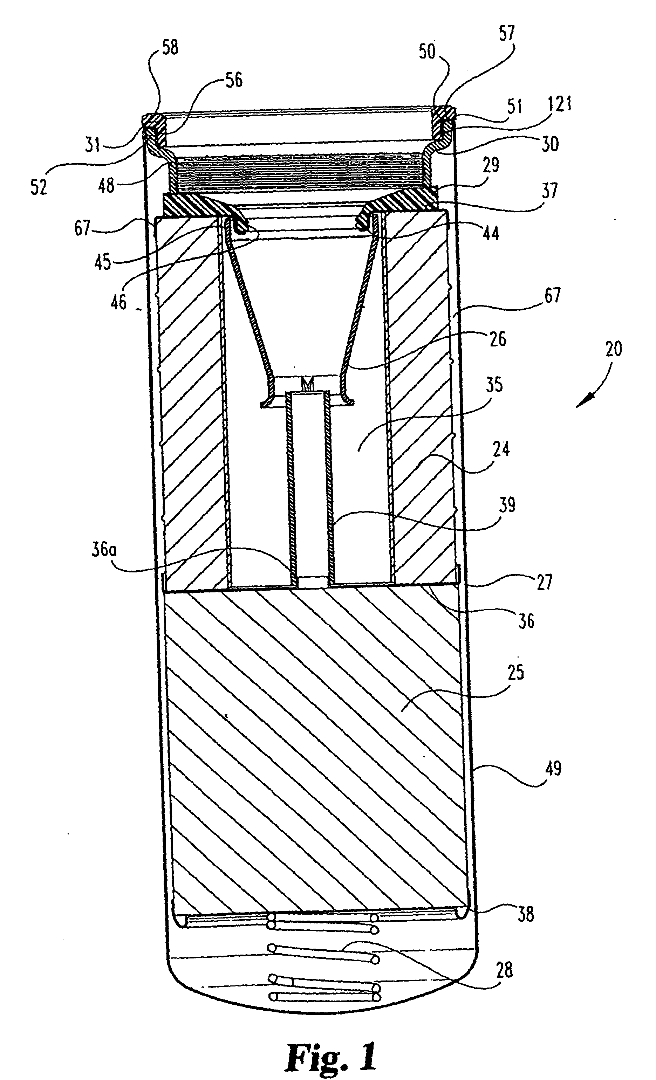

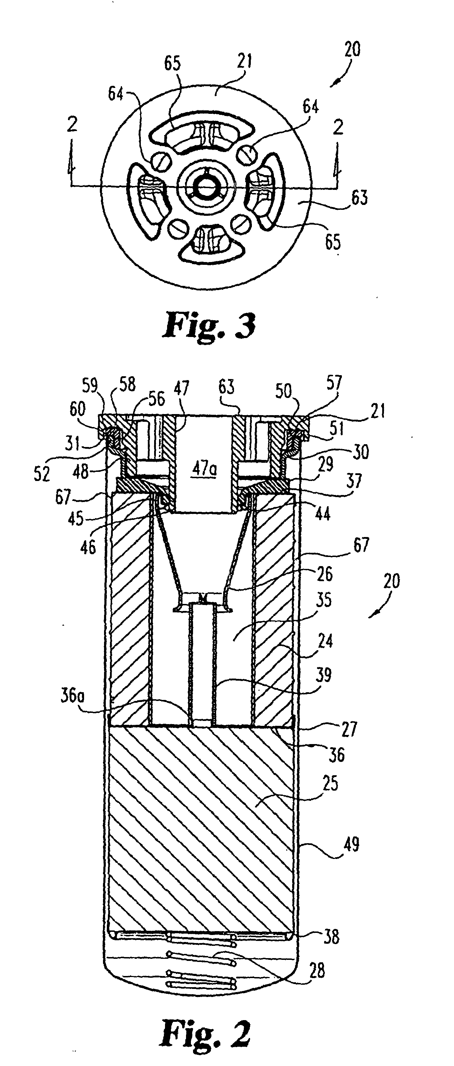

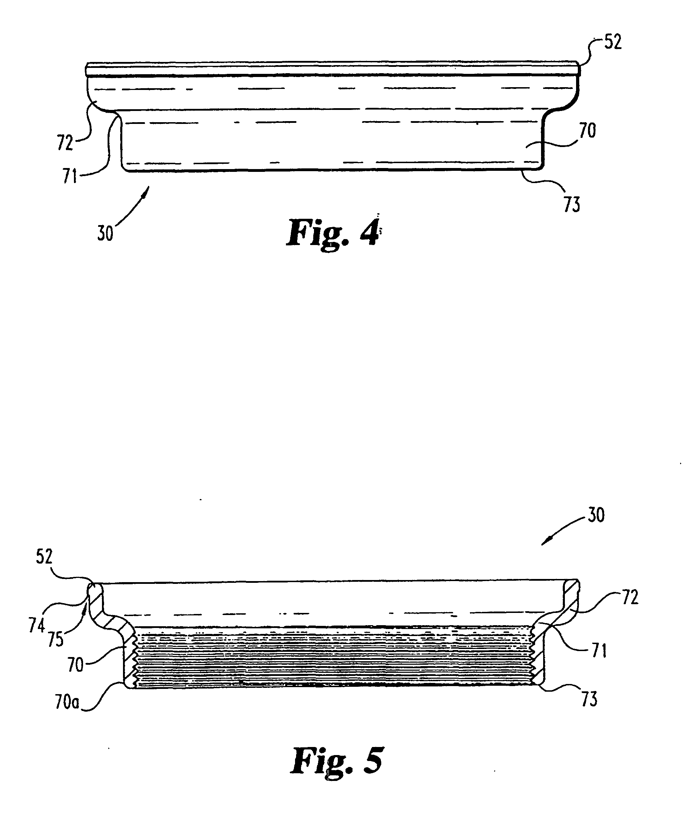

Referring to FIGS. 1, 2, and 3, a fluid filter assembly 20 which is constructed and arranged according to the present invention is illustrated. In FIG. 1 the filter assembly 20 is illustrated as it would appear unmounted onto the filter head 21 (engine block mounting base) of FIG. 2. In the FIG. 2 illustration, the filter assembly 20 is threadedly attached and mounted onto filter head 21. FIG. 3 is a top plan (end) view of the filter head 21 with the filter assembly 20 attached.

Filter assembly 20 includes a full-flow, primary filter element 24, a cooperating by-pass filter element 25, an outlet flow nozzle 26, an outer shell 27, a support spring 28, an inner seal 29, a unitary nutplate. 30, and an outer seal 31. The primary filter element 24 includes a hollow interior 35, a lower endplate 36, and an upper endplate 37. The two endplates are sealed across their corresponding primary filter element ends in order to prevent fluid flow out through the ends of the primary filter element 24. The by-pass filter element 25 abuts up against the lower endplate 36 and includes an enclosing base endplate 38. The interior of endplate 36 is open and formed with short, cylindrical conduit 36a. Tube 39 which fits around conduit 36a provides fluid flow communication from by-pass filter element 25 into nozzle 26. In the preferred embodiment, tube 39 is in unitary combination with flow nozzle 26, (i.e., a one-piece combination). The unitary tube 39 and flow nozzle 26 is constructed out of nylon. It is also envisioned that a separate tube 39 can be used and fitted around conduit 36a and located within nozzle 26.

Upper endplate 37 is formed with an inner annular lip 44 which provides an anchoring edge for inner seal 29. Inner seal 29 is fabricated out of rubber. The outwardly flared end 45 of flow nozzle 26 fits around the inner annular lip 44. The inside annular surface 46 of inner seal 29 fits up against stem 47 of the filter head 21 (see FIG. 2). The unitary nutplate 30, which may be stamped, molded, or machined, is internally threaded and is assembled to the externally-threaded portion 48 of filter head 21. In the preferred embodiment nutplate 30 is stamped out of metal.

The outer shell 27 is metal and has a substantially cylindrical sidewall 49 which includes a formed upper lip 50 which is shaped with an inverted receiving channel 51. Tightly and securely anchored into annular channel 51 is the annular upper, outer lip 52 of nutplate 30. While it would be desirable for this interface junction to be liquid-tight by the mechanical fit of the components, this is not achievable. Accordingly the outer seal 31 is provided to ensure that there is no leakage through this interface. Outer seal 31 is fabricated out of rubber. While an adhesive may be placed between the annular channel 51 and lip 52 of nutplate 30, this is done to help keep the nutplate from spinning during installation. Outer seal 31 provides an additional level of security against fluid leakage. Annular seal 31 fits down inside of the inner wall 56 of channel 51 and extends upwardly and outwardly over upper wall 57 of channel 51. The upper surface 58 of seal 31 abuts up tightly against the base 59 of channel 60 of filter head 21.

The end face 63 of filter head 21 includes an alternating pattern of four bolt holes 64 and four fluid inlet apertures 65. The fluid inlet apertures 65 provide fluid inlets for the fluid to be filtered to flow into the filter head 21. The four bolt holes 64 provide a means of mounting the filter head 21 to the vehicle engine. The open interior of head 21 provides a flow path into the vicinity of inner seal 29 where the unfiltered fluid is able to flow in a radially outward direction beneath the lower edge of nutplate 30. Stem 47 is hollow and is substantially coaxial with nozzle 26. The hollow interior 47a creates a flow exit passageway for the filtered fluid exiting from the primary filter element 24 and from the by-pass filtering element 25.

As will be understood by reference to FIGS. 2, 6, and 7, the inner seal 29 is configured with four flanges 65a-65d and in alternating sequence therewith, four flow openings 66a-66d. Depending on the threaded depth of the filter head 21 as it is axially advanced into the nutplate 30, either the lower edge of the filter head (portion 48) or the lower edge of nutplate 30 may come to rest on the top surface of seal 29. Once either the filter head or nutplate (or conceivably both) comes to rest on the top surface of the seal, four fluid flow passages are created past the inner seal via the four flow openings 66a-66d. These flow passages lead to outer annular clearance space 67 and from this space the fluid flows into the primary filter element 24 and as appropriate, into the by-pass filter element 25. Clearance space 67 is created and defined by the cylindrical shape of the outer shell 27, and by the cylindrical shape of filtering elements 24 and 25.

Referring now to FIGS. 4 and 5, the nutplate 30 is illustrated in greater detail. Nutplate 30 is an annular member with an internally-threaded lower wall portion 70, two radiused bends 71 and 72, and an annular outer lip 52. As previously described, the lower edge 73 which is a continuous cylinder in shape seals against the top surface of the inner seal 29. The outer lip 52 is securely received within the inverted receiving channel 51 of the outer shell. The slight undercut edge 74 on lip 52 is able to be used to crimp the outer shell 27 into recess 75 beneath edge 74 for a tighter and more secure joint between the outer shell 27 and the nutplate 30. In contrast to the typical designs for molded nutplates, internally-threaded portion 70 is substantially larger than earlier designs such that the radial distance between the inside diameter surface 70a of cylindrical wall 70 and the outside diameter of outer lip 52 is relatively short, thereby significantly reducing the length of the moment arm. In one embodiment of the present invention, the inside diameter size of portion 70 is approximately 3.52 inches (89.41mm) and the outside diameter size of lip 52 is approximately 4.43 inches (112.52mm) for a moment arm of approximately 0.455 inches (11.56mm). With the moment arm reduced to a significantly shorter length, the amplitude of the vibrations seen by the f ilter assembly 20 is reduced. Vibrations are generated by engine operation and are transmitted to the vehicle as the vehicle travels over the road. These vibrations are transmitted to the fluid filter assembly by the filter head 21 at the location of the threaded fit between nutplate portion 70 and the threaded portion 48 of filter head 21. The transmitted vibrations travel to the outer shell 27 and it is believed that the length of the moment arm is directly proportional to the amplitude of the vibrations as seen by the outer shell. By increasing the inside diameter size of portion 70 over that of the more "traditional" nutplates for approximately the same outer shell size, the moment arm is reduced which in turn reduces the amplitude of the vibrations which are transmitted to and seen by the outer shell.

With "traditional" nutplates, fluid inlet apertures are formed in that portion of the nutplate between the threaded inside diameter and the outer peripheral edge.

Since the inside diameter of traditional nutplates is substantially smaller than the inside diameter of the present invention nutplate, there is sufficient area which is of an annular ring shape for fluid inlet apertures to be molded, cast, or machined directly into and through the nutplate. However, with the present nutplate design, the total width of the sidewall from the inside diameter 70a to the outside diameter of outer lip 52 is very narrow, typically less than 1/2 inch (12.7mm). The only land area for inlet flow holes to be formed is between radius bends 71 and 72. The narrow width of the land area means that any flow hole which would be drilled, cast, or molded through that area must be extremely small. In order to get adequate fluid flow, a large number of these smaller flow holes would be required. In order to get sufficient flow area, a great deal of nutplate material would have to be removed from this narrow land area and this would substantially weaken the nutplate. Accordingly, the nutplate of the present invention is free of any flow inlet holes which are actually formed into and through any portion of the nutplate 30. Instead, the present invention incorporates a unique style of nutplate in combination with a cooperating inner seal in order to create a plurality of flow paths for the incoming unfiltered fluid which actually passes between the nutplate and the corresponding inner seal as it flows from the engine block mounting base into the annular clearance space 67. Filter head 21 includes threaded portion 48 which provides the mounting or attachment structure for the fluid filter assembly 20. With the filter head 21 properly mounted to the engine and with the flow passages and conduits connected, the filter assembly 20 can be readily and easily installed by threading the nutplate 30 onto portion 48. As this threaded engagement is advanced and tightened, the outer annular seal 31 is drawn into sealing contact against the upper wall 57 and the inner wall 56 of channel 51.

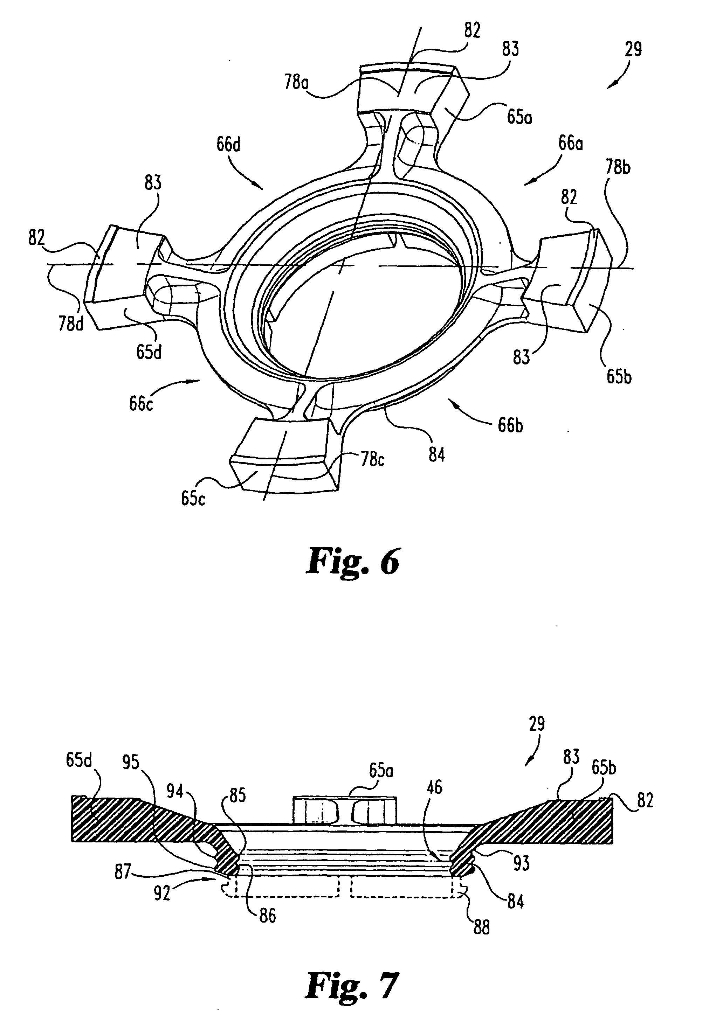

Referring now to FIGS. 6 and 7, the unitary inner seal 29 is illustrated in greater detail. Each of the four flanges 65a-65d are virtually identical and are configured so as to be symmetrical about a corresponding and radiating centerline. Centerlines 78a-78d are located 90 degrees apart. Equally-spaced between adjacent flanges 65a-65d are flow openings 66a-66d. Fluid flow entering filter head 21 is initially received between stem 47 and threaded portion 48. In order to travel into annular clearance space 67, the fluid must travel radially outwardly beneath the lower edge 73 of nutplate 30. The only places where such fluid flow can occur is at the locations of the four flow openings 66a-66d.

Each flange 65a-65d includes a radiused outer lip 82 and a land area 83. The lower edge 73 of nutplate 30 rests inside of the four lips 82 and on top of the four land areas 83. The center hub 84 is a hollow, annular structure which includes inside annular surface 46 with two spaced-apart annular ribs 85 and 86. These two ribs tightly abut up against stem 47 in order to provide a sealed interface. The outer surface 93 of center portion 84 includes two spaced-apart sealing ribs 94 and 95 which fit tightly up against the annular lip 44 of upper endplate 37. Each flange 65a-65d is illustrated with an optional depending wall 87 which includes an offset portion 88. Since the preferred embodiment of each flange does not include the depending wall nor the offset portion, these are illustrated in broken line form. If present as an alternative embodiment, the tapered and offset portion 88 is constructed and arranged to fit beneath inner annular lip 44. In this alternative embodiment, using the optional wall 87, the innermost edge of lip 44 fits within recess channel 92.

The inner seal 29 is designed to provide dual radial seals on the upstream side of the fluid flow as well as on the downstream side. The two ribs 85 and 86 on the inside surface 46 of center portion 84 abut up against stem 47 to prevent the incoming fluid flow from by-passing the filter elements by passing directly into flow nozzle 26. On the downstream side the filtered fluid in nozzle 26 is precluded from flowing past center portion 84, on either the inside diameter side or on the outside diameter side due to the presence of ribs 85 and 86 and ribs 94 and 95, respectively.

In contrast to earlier seal designs which provide sealing by means of a compression face seal, the present invention incorporates dual radial seals. The inner seal 29 also functions as a vibration damper between the nutplate 30 and the upper endplate 37 to limit the level of vibration which is transmitted to the primary filter element 24. During the installation of the filter assembly 20 onto filter head 21, the positioning of stem 47 into center portion 84 provides some degree of coarse alignment between the filter assembly 20 and the filter head 21, such that the threaded engagement can be achieved more easily, especially in blind installations.

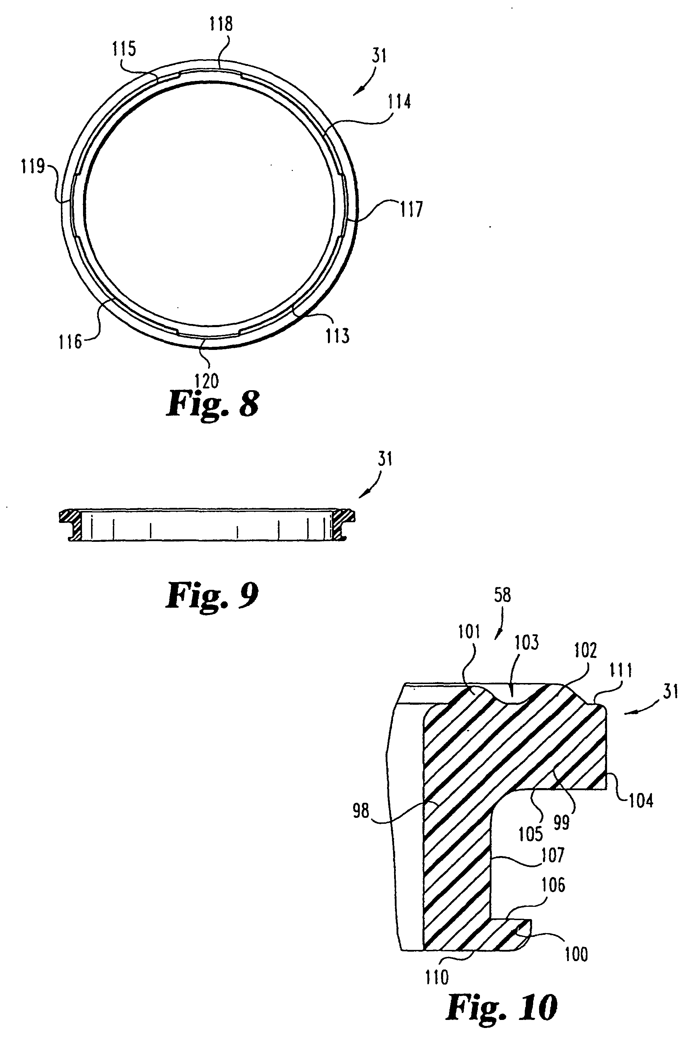

Referring now to FIGS. 8, 9, and 10, the outer seal 31 is illustrated in greater detail. Outer seal 31 is a substantially annular member with a substantially cylindrical sidewall portion 98 which is bounded on the top by upper surface 58 and radial flange 99 and on the bottom by radial lip 100. Upper surface 58 includes two raised annular ribs 101 and 102 which are radially spaced apart from each other by an annular recessed portion 103. Portion 103 is curved in lateral section as is illustrated in FIG. 10. The outer surface 104 of flange 99 is substantially cylindrical and underside surface 105 is substantially planar. The cylindrical axis of surface 104 is substantially perpendicular to surface 105. The upper annular surface 106 of lip 100 is substantially planar and substantially parallel to surface 105. The outer cylindrical surface 107 of sidewall portion 98 is substantially concentric with respect to surface 104.

The lower surface 110 has an annular ring shape and is substantially planar. The geometric planes which generally define and are coextensive with surfaces 110, 106, and 105 are each substantially parallel to the others. Surfaces 105 and 107 fit tightly up against upper wall 57 and inner wall 56, respectively, of the inverted receiving channel 51. The abutment of these two surfaces to the two cooperating walls establishes a fluid-tight interface between outer seal 31 and the formed upper lip 50 of outer shell 27 which defines channel 51.

While it has been described that the upper surface 58 abuts up tightly against base 59 of channel 60, it is actually ribs 101 and 102 which contact base 59. Rib 101 extends above surface 111 by approximately 0.033 inches (0.838mm) and rib 102 extends above surface 11 by approximately 0.039 inches (0.991mm). The slight height difference between these two ribs is designed into the upper seal in order to provide enhanced sealing and to create sealing redundancy. Seal 31 provides a means of preventing any fluid leakage from the filter assembly 20 between the filter assembly and the filter head 21. Additionally, seal 31 provides a damper against vibration. While most outer seals of earlier fluid filter assemblies provide a single seal by means of a compression face seal, the present invention, by way of seal 31, uses the two ribs in compression. The built in redundancy of the two ribs offers first and second lines of defense to prevent filter assembly leakage. If there is a deterioration of the seal through one of the ribs such that the seal opens, the second rib provides a backup seal to prevent leakage. By using the two ribs 101 and.102, any slight dimensional variations or misalignments will not preclude the establishment of a sealed interface. As the two ribs are gradually compressed, the resistance force of seal 31 against further compression also increases rapidly. This gives a positive feedback in feel to the installer so that the installer can tell where to stop without overtightening (i.e., threading) the filter assembly 20 into the filter head 21. In order to maintain the flexibility and resiliency of seal 31, it is important that is not be compressed to the point that the seal becomes functionally "solid".

By creating seal 31 such that rib 102 is "higher" than rib 101 by approximately .006 inch(0.152mm), seal 31 will not move from its position nor tip over during installation. Further, the protruding tips of each ribs 101 and 102 have less total surface area, even when compressed, than earlier conventional face seal designs. This reduced surface area reduces the installation and removal friction and torque, making the filter assembly easier for the customer to use. Radial lip 100-and surface 106 are constructed and arranged to catch onto the lower edge of the inner wall 56 of channel 51.

While radial lip 100 is substantially annular in shape, it is configured in a split ring fashion as is illustrated in FIG 8. Lip 100 includes four circumferential sections 113, 114, 115, and 116. Each pair of adjacent sections are spaced apart by spaces 117, 118, 119, and 120. As described, lip 100 is used to snap beneath the inner, lower edge 121 of inner wall 56 and thereby anchor the outer seal 31 to the remainder of filter assembly 20. In this way, the seal 31 comes off with the filter assembly 20 when the filter assembly 20 is removed from the filter head 21, rather than staying on the filter head 21. The split-finger design of radial lip 100 (i.e., the four spaced-apart sections 113-116) enables an easy snap-fit assembly of the outer seal 31 and permits a simplified molding process.

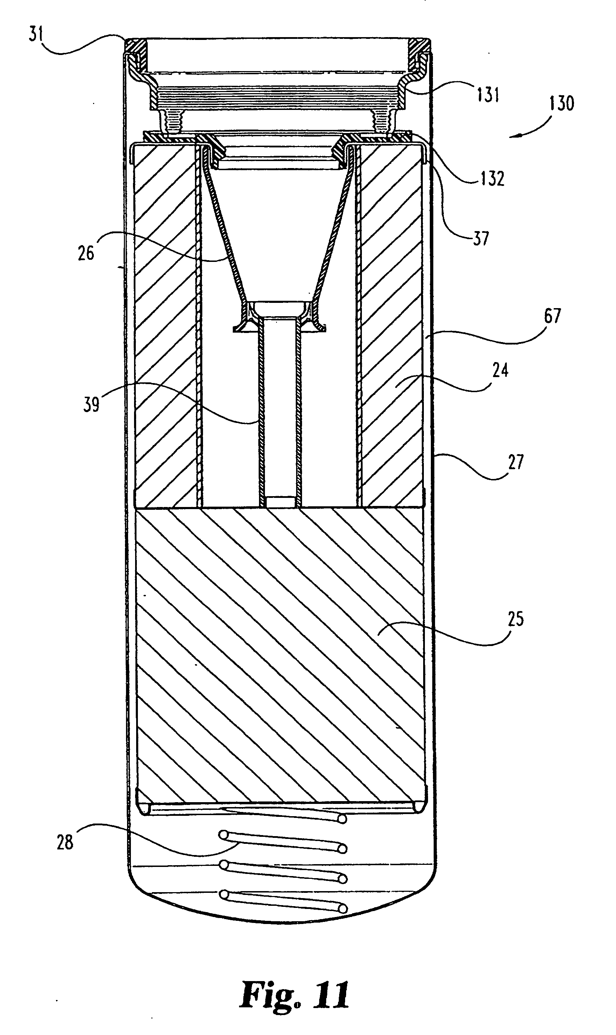

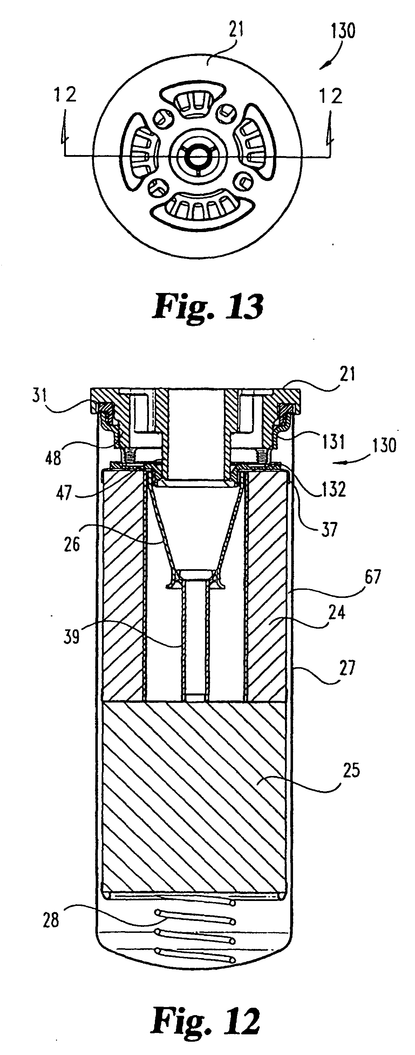

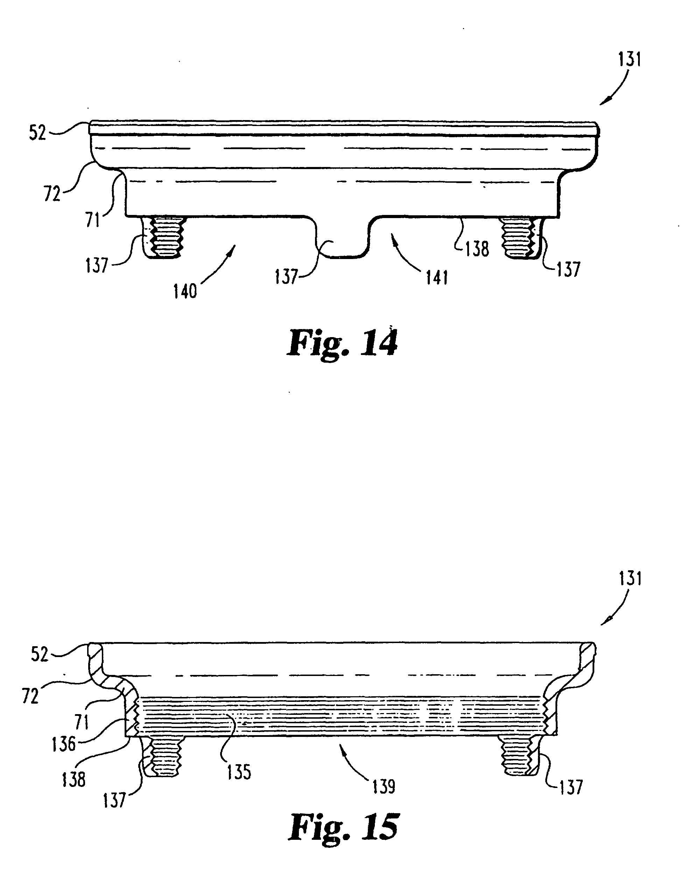

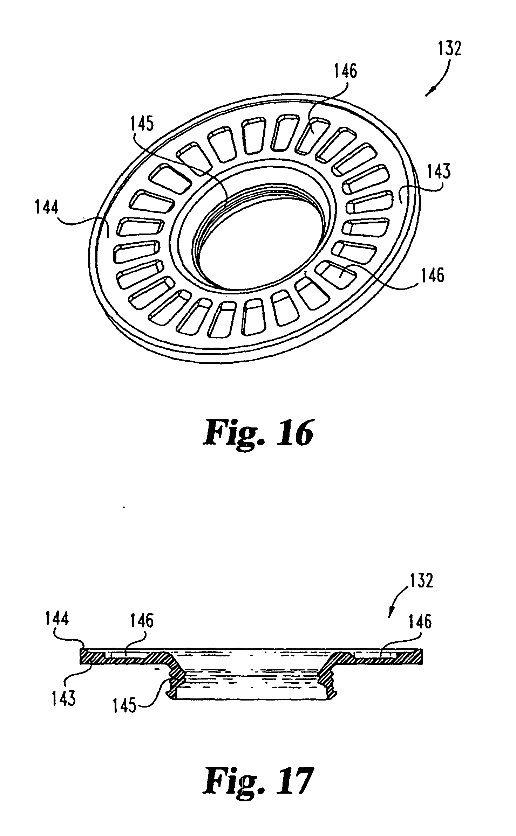

Referring now to FIGS. 11, 12, and 13, an alternative filter assembly 130 which embodies the present invention is illustrated. Fluid filter assembly 130 is virtually identical to fluid filter assembly 20 with two exceptions. Fluid filter 130, as compared to fluid filter assembly 20, includes a differently styled nutplate 131 (see FIGS. 14 and 15) and a differently styled inner seal 132 (see FIGS. 16 and 17). The filter head 21 of FIGS. 12 and 13 is the same as that used in the filter assembly and filter head combination of FIGS. 2 and 3. The remainder of filter assembly 130 is the same as filter assembly 20 and the outer seal 31 of FIGS. 11 and 12 is identical to the outer seal 31 of FIGS. 1 and 2.

With regard to the only two differences between filter assembly 130 and filter assembly 20, refer to FIGS. 14-17. In FIGS. 14 and 15, annular nutplate 131 is illustrated in greater detail. Nutplate 131 is the same as nutplate 30 from bend 71 to outer lip 52. Below bend 71 the two nutplate designs are different. While nutplate 30 has an internally-threaded portion 70 which is substantially cylindrical, the internally-threaded portion 135 of nutplate 131 is configured with a smaller cylindrical section 136 and three depending projections 137. The three projections 137 are equally spaced around the circumference of section 136 and extend downwardly from lower edge 138. A consequence of this design is the creation of three flow openings 139, 140, and 141. In order to help visualize the nature of the three flow openings 139-141, imagine a horizontal line drawn in FIGS. 14 and 15 which touches the lower edge of each projection 137. This horizontal line creates three openings, each of which is defined on its boundary side by lower edge 138, on its sides by one pair of adjacent projections 137, and on its lower boundary by the imaginary horizontal line. In the actual design of the present invention, the imaginary horizontal line is in fact replaced by the upper or top surface of inner seal 132. The combination of nutplate 131 and inner seal 132 creates and defines the three flow openings 139-141 between these two members and through which unfiltered fluid passes on its way from the engine block mounting base to the annular clearance space 67. In this arrangement the entering flow is past the nutplate 131 and across the surface of the inner seal 132. In the FIG. 1 arrangement the entering flow is beneath (i.e., across) the nutplate lower edge 73 and past adjacent flanges 65a-65d. The nutplate 131 is constructed and arranged such that the lower surface of each projection rests on the upper surface of inner seal 132. The inside surface of each projection is internally threaded as a continuation of the thread pitch present as part of section 136. In this way, the threaded advancement of the filter assembly 130 by way of nutplate 131 onto filter head 21 does not have to stop at the lower edge 138.

Referring now to FIGS. 16 and 17, the inner seal 132 is illustrated in greater detail. Seal 132 is virtually identical to inner seal 29 except that the four flanges 65a-65d are replaced by a continuous annular ring portion 143. Since the four openings 66a-66d are effectively "filled-in" by the design of seal 132, an alternative fluid flow path needs to be established. Since the fluid cannot flow through the inner seal 132, the fluid must flow across the upper surface 144 of seal 132. This is where the openings 139-141 are utilized. The fluid is able to flow beneath lower edge 138, through openings 139-141, and into clearance space 67. The center portion 145 and all of the corresponding and cooperating structural features are identical to center portion 84 and its corresponding and cooperating structural features. The circumferentially arranged series of equally-spaced pockets 146 which are formed in the upper or top surface 144 of seal 132 are provided for weight and material reduction. The nature of use for the inner seal 132 and its placement within the filter assembly permits a weight and material reduction without creating any negative effect, such as reducing the strength or rigidity of the part. A reduction in the amount of material helps to lower the cost of the fluid filter assembly. The placement of the inner seal 132 flat against the filter endplate 37 provides the necessary backing to the inner seal 132 and the sealing capabilities of the inner seal are not affected by the creation of the weight-reduction, material-reduction pockets 146.

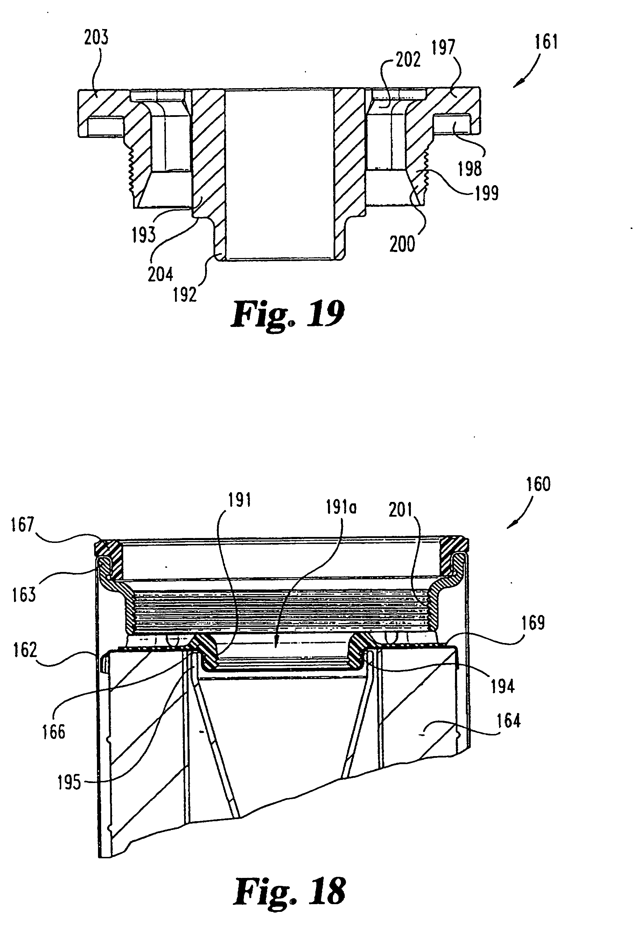

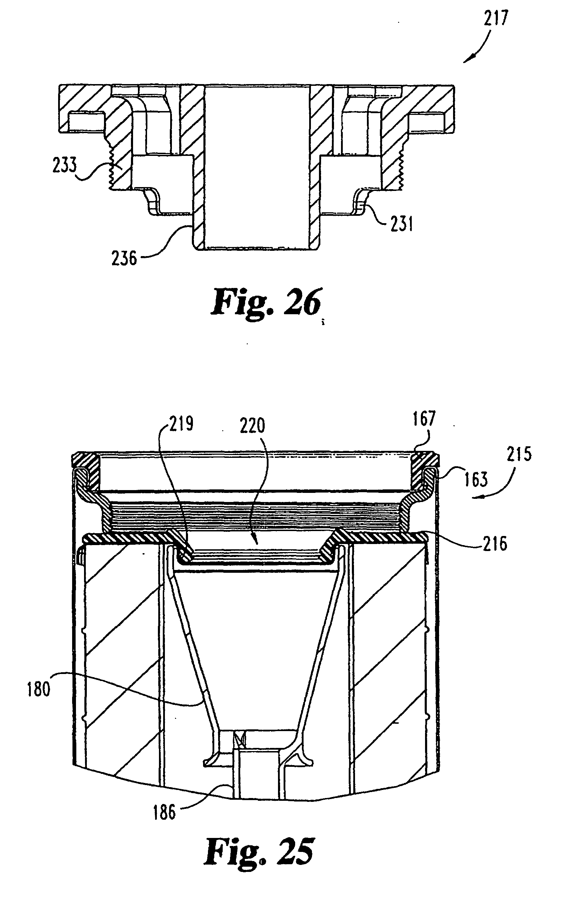

A related embodiment of the present invention is illustrated in FIGS. 18-31. FIG. 18-24 illustrate one style of this related embodiment while FIGS. 25-31 illustrate a second style of this related embodiment. The focus of this related embodiment is on the installation procedure and the sequence of steps involving the threading of the fluid filter 160 onto the cooperating filter head 161 (see FIGS. 18-21). In the description which follows, references to upper and lower and top or bottom are based upon the orientation of the fluid filter 160 and filter head 161 as illustrated in FIGS. 18-21. However, it is to be understood that in actual vehicles the orientation of these two components could be different from that illustrated herein.

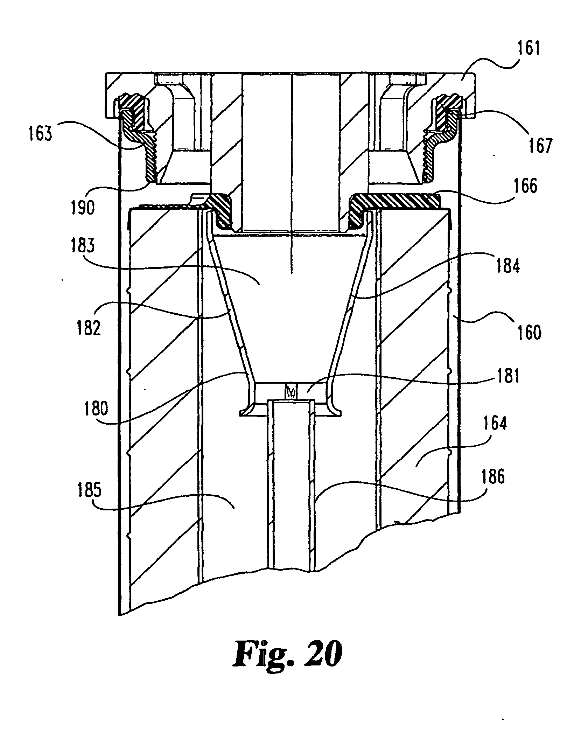

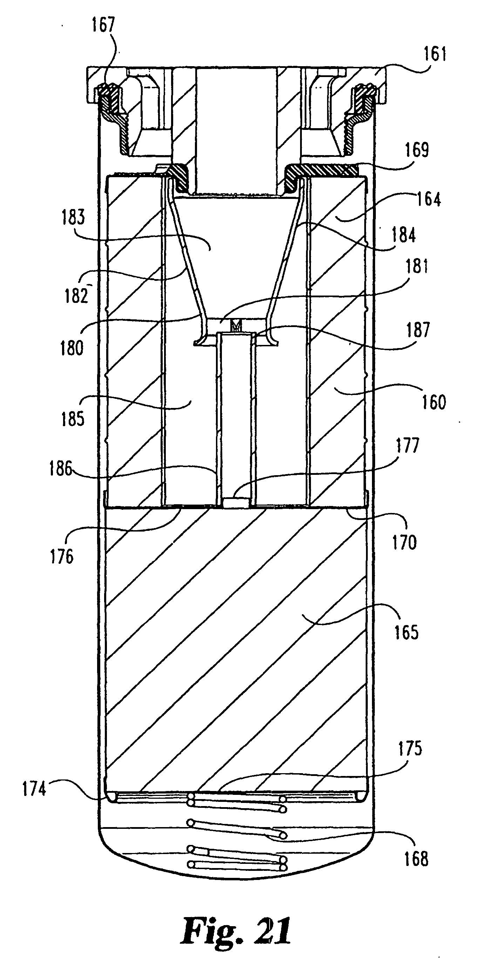

Referring now to FIG. 18, the open end of a fluid filter 160 which embodies the present invention is illustrated. The remainder of fluid filter 160 is illustrated in FIG. 21. A cooperating filter head 161 is illustrated in FIG. 19. The assembly (i.e., installation) of fluid filter 160 and filter head 161 are illustrated in FIGS. 20 and 21.

Fluid filter 160 includes an outer housing 162, annular nutplate 163, a primary filtering element 164, a by-pass filtering element 165, an inner seal 166, an outer seal 167, and a support spring 168. The annular nutplate 163 is a unitary member which is internally threaded for threaded engagement and assembly to the externally threaded annular wall of the filter head. The primary filtering element 164 includes a hollow, generally cylindrical filtering media and top and bottom endplates, 169 and 170, respectively. The by-pass filtering element 165 includes a lower endplate 174 which seats against the upper end 175 of support spring 168. The opposite end of by-pass filtering element 165 is sealed up against the bottom endplate 170 and annular inner plate 176 closes off the remainder of the by-pass filtering element 165. All exiting fluid must pass through outlet conduit 177.

Venturi flow nozzle 180 is a unitary member which includes a low pressure zone 181 at the throat and a gradually diverging sidewall 182 which has a conical shape and defines a pressure-recovery zone 183 in the downstream divergent section 184. The flow nozzle 180 is effectively positioned entirely within the hollow interior 185 of the primary element. One end of tube 186 fits over conduit 177 in a liquid-tight manner and the opposite end 187 of the tube is positioned within the low pressure zone 181 and is substantially centered within the defining sidewall of the flow nozzle. In the preferred embodiment the tube 186 and flow nozzle 180 are combined as a unitary member.

Fluid filter assembly 20 and fluid filter 160 are virtually identical relative to the design and arrangement of the outer housing or shell, the two filtering elements, the venturi flow nozzle, and connecting tube, endplates, and the support spring. This portion of the present invention which is not the primary focus of the invention is also described in part in US-A-5,695,637 which issued in pursuit of United States Serial No. 08/699,713, filed August 27, 1996 and which claimed priority of United States Serial No. 08/084,875, filed June 30, 1993, now abandoned.

The relationship of the outer shell 27 to the nutplate 30 and outer seal 31 as illustrated in FIG. 1 and described is the same for outer housing 162, nutplate 163, and outer seal 167 as illustrated in FIGS. 18, 20, and 21. Further, outer seal 31 and outer seal 167 are virtually identical to each other in size, shape, material, and function. The primary differences between the FIG. 1 fluid filter assembly 20 and the FIG. 21 fluid filter 160 involve the nutplates 30 and 163 and the inner seals 29 and 166. The FIG. 21 embodiment also establishes an important and unique assembly relationship between the fluid filter 160 and the filter head 161. This important and unique assembly relationship is utilized in order to improve the installation procedure of the fluid filter 160 onto the filter head 161 as well as to improve the procedure for removal of the fluid filter 160 from the filter head 161.

Inner seal 166 is positioned between the top endplate 169 and the lower edge 190 of the unitary nutplate 163. An inner lip portion 191 of the inner seal 166 extends inwardly in a radial direction and defines a substantially cylindrical passageway 191a for receipt of the protrusion 192 of the inner stem 193 of the filter head 161. The top endplate 169 includes an inwardly directed radial lip 194 which is positioned between the upper end 195 of the flow nozzle 180 and the inner lip portion 191. An innermost radial portion of radial lip 194 provides an abutment surface for lip portion 191. The foregoing description involving the inner seal 166, top endplate 169, and flow nozzle 180 is virtually identical to the assembly and relationships of the corresponding component parts of the FIG. 1 assembly.

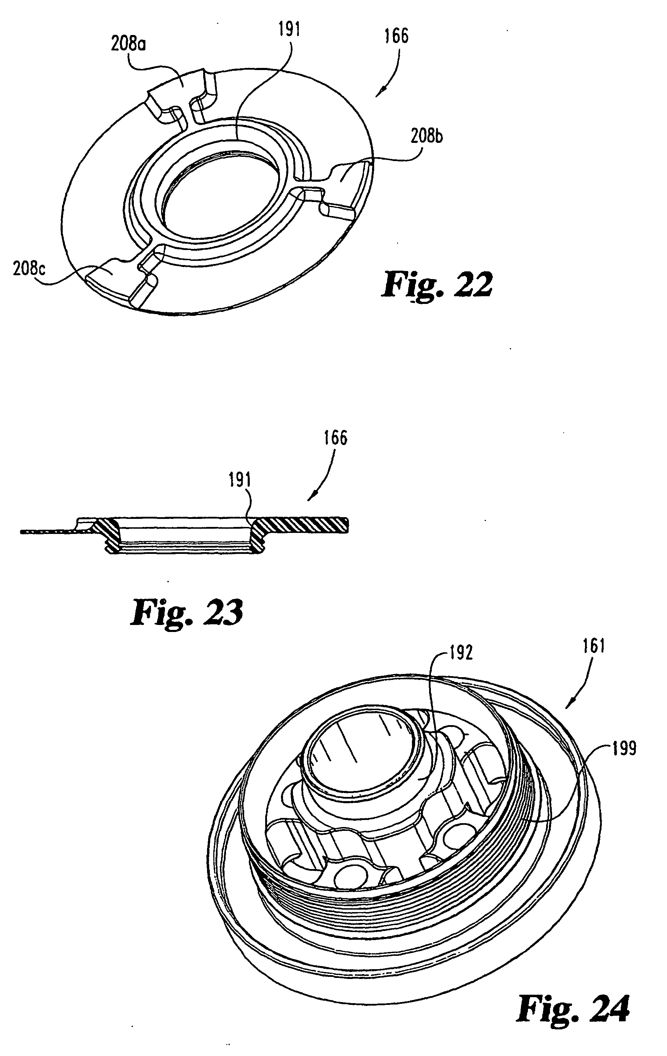

With reference to FIG. 19, the structural details of the filter head 161 are illustrated. A perspective view of the underside of the filter head 161 is illustrated in FIG. 24. Filter head 161 includes an annular outer flange 197 which is constructed and arranged with an annular channel 198 (inverted) which is sized, shaped, and positioned to fit over and receive the outer seal 167 as well as a small portion of the outer housing 162 and nutplate 163 as is illustrated in FIGS. 20 and 21. The outer annular wall 199 is externally threaded around its lower edge 200 for threaded engagement with the internal threads 201 of the nutplate 163. The inner annular wall, (i.e., inner stem 193), is spaced apart from wall 199 and defines therewith an annular inlet flow corridor. Flow apertures 202 are provided in the upper wall 203 of the filter head 161 in order for the fluid which is to be filtered to enter the fluid filter 160.

Inner stem 193 includes the recessed, annular protrusion 192 which is substantially concentric with the remainder of stem 193 and extends from annular bearing surface 204 in the direction of the inner seal 166. As will be described in greater detail, the inner stem 193 is inserted into the passageway 191a defined by the inner lip portion 191 of the inner seal such that protrusion 192 establishes a liquid- tight interface against lip portion 191. Passageway 191a and protrusion 192 are each substantially cylindrical and are sized such that there is an interference fit causing the rubber compound used for inner seal 166 to be resiliently compressed in order to create the annular liquid-tight interface. Bearing surface 204 is located radially outwardly of the protrusion 192.

The axial positioning of the inner stem 193 is influenced by several portions of the fluid filter 160 and by various dimensional relationships involving these portions. The extent of threaded engagement between the outer annular wall 199 and the internal threads 201 of the nutplate is one factor. The abutment of bearing surface 204 against the upper surface of the inner lip portion 191 is another factor which influences the axial relationship between the filter head 161 and fluid filter 160. The axial length of support spring 168 relative to the axial length of the two filtering elements and the thickness of inner seal 166 are other factors. When the annular bearing surface 204 abuts against the top surface of lip portion 191, the fluid filter 160 is not fully seated and engaged into the filter head 161. The continued axial advancement of the filter head onto the fluid filter, (i.e., threaded engagement), causes the bearing surface 204 to push against the lip portion 191 and in turn the support spring is compressed. The spring constant also has an effect on the ease or difficulty in the continued threaded advancement. Another factor which is involved in the axial relationship between the filter head 161 and the fluid filter 160 is the engagement of the outer seal 167 into the inverted channel 198. The point at which these two portions abut, relative to when the bearing surface 204 abuts against the lip portion 191 relative to spring compression in the axial direction and relative to the thread engagement between the nutplate 163 and the filter head 161 all have an effect on the ease or difficulty of installing the fluid filter 160 onto the filter head 161 and the ease or difficulty in removing the fluid filter from the filter head.

With reference to FIGS. 22 and 23, the inner seal 166 is illustrated-in greater detail. Consistent with the objectives of the present invention, inner seal 166 includes annular inner lip portion 191 and three equally-spaced flanges 208a-208c which are in unitary, molded construction with lip portion 191. Before installation onto the filter head 161 the spring 168 pushes up on the filtering elements 164 and 165 causing the upper surface of each flange 208a-208c to abut up against the lower edge 190 of the nutplate 163. In this "before installation" condition, the flow passageways which are created between the inner seal and the nutplate and in between the three flanges 208a-208c provide a means of drainage. It is the open area between adjacent flanges which provides the open area for the flow passageways. The minimal clearances of these flow passageways, while adequate for drainage and venting, are not adequate to handle the full flow requirements during vehicle operation. When the fluid filter 160 is threaded onto the filter head 161 and bearing surface 204 pushes down on the lip portion 191, additional clearance is created between the inner seal and the lower edge of the nutplate, thereby establishing a radial flow area for the incoming fluid which is delivered by way of the filter head. This additional clearance is adequate to handle the full flow requirements. The inside edges of the lip portion 191 and the cylindrical opening defined by the inner lip portion are designed substantially the same as the corresponding portions of inner seal 29.

As generally described with regard to FIGS. 18-24, the assembly, (i.e., installation), sequence between the filter head 161 and the fluid filter 160 begins with thread alignment and then thread engagement. As the threaded engagement between the filter 161 and the nutplate 163 continues, the inner seal 166 is engaged, pushing down on the two filtering elements 164 and 165 and axially compressing the support spring 168. The support spring 168 acts as a thrust bearing and the downward axial movement of the primary filtering element opens up the radial flow areas. Next, with only the friction of the threads and the spring to resist turning, the outer seal is contacted by the inverted channel 198 of the filter head 161. This procedure allows for more accurate compression of the outer seal.

As will be understood, the ability of the present invention to function in the manner described is dependent on the design of the filter head and the dimensional relationship between the bearing surface 204, protrusion 192, the external threads on annular wall 199, the base of channel 198, and the location of the lip portion 191 before installation of the fluid filter 160 onto the filter head 161. When the fluid filter 160 is to be removed from the filter head 161, the installation sequence is followed in the reverse order of the sequence which has been described for installation.

With regard to FIGS. 25-31, a second arrangement of the related embodiment of the present invention is illustrated. The only difference between fluid filters 215 and 160 is limited to the differences between the two corresponding inner seals 216 and 166. There is also a difference between the filter heads 217 and 161 which is necessary in order to create a slightly different approach for the present invention. As for the remaining components, the outer seals, nutplates, filtering elements, outer housings, flow nozzles, and support springs are virtually identical for fluid filters 160 and 215 and accordingly, the same reference numerals have been used to denote that these components are virtually identical.

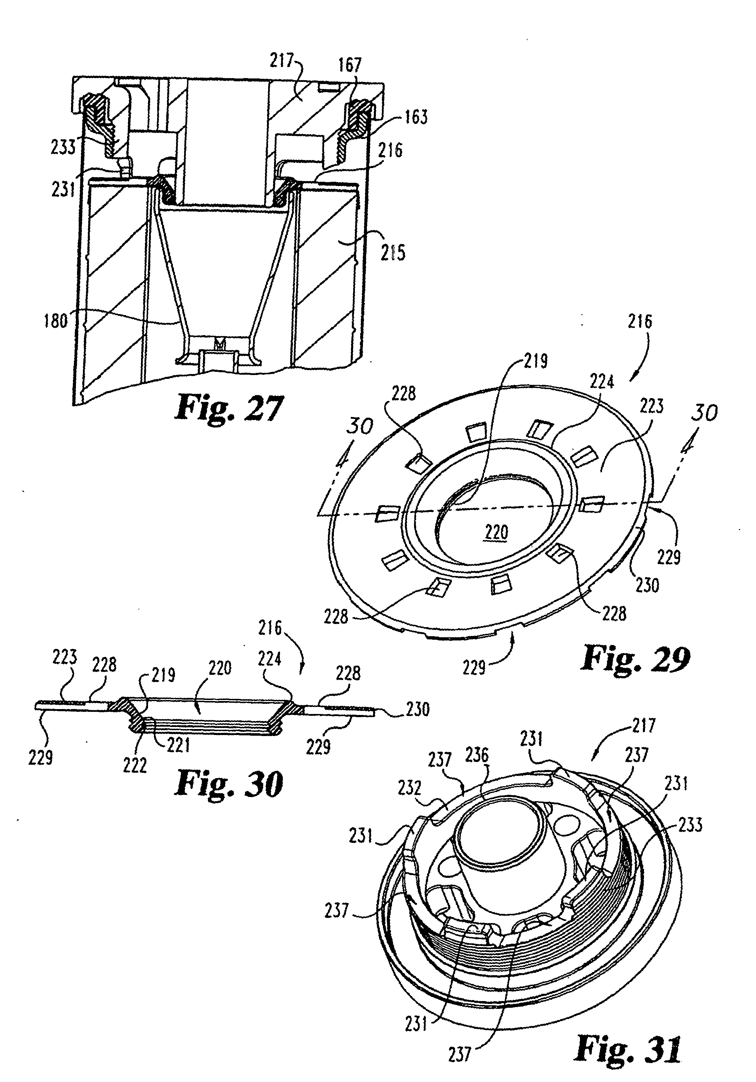

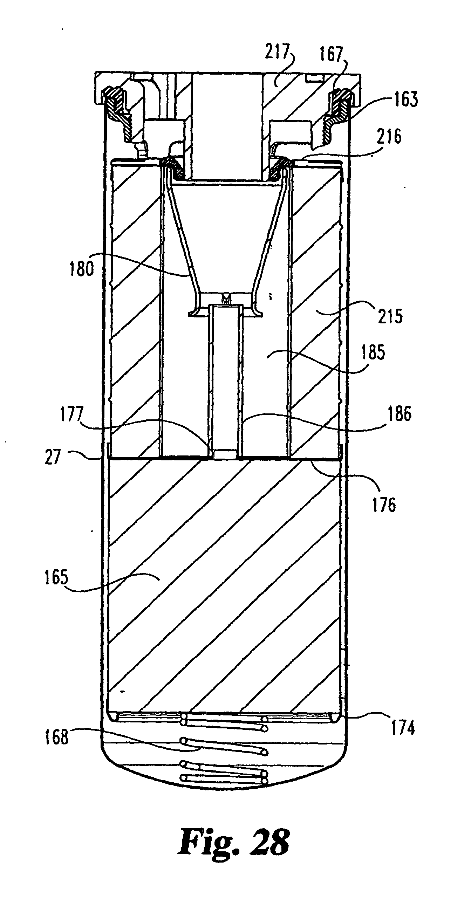

The differences between inner seal 166 and inner seal 216 is best illustrated by a comparison of FIGS. 22 and 23 versus FIGS. 29 and 30. Inner seal 216 includes an annular inner lip portion 219 which defines a substantially cylindrical inner opening 220 which is further defined by inner annular ribs 221 and 222 which are virtually identical to ribs 85 and 86 (see FIG. 7) as well as the ribs on lip portion 191. Inner seal 216 has a substantially flat upper surface 223 which is only slightly recessed below the upwardly protruding annular rib 224 which is part of the inner lip portion 219. Disposed in the annular upper surface 223 are ten equally-spaced flow openings 228. Aligned with each flow opening 228 is a corresponding radial flow channel 229 (ten total) located in the underside surface of the inner seal 216. Each flow channel 229 has a generally rectangular shape in lateral section and extends from the outer circumferential edge 230 radially inwardly until the flow channel 229 intersects the corresponding flow opening 228.

With reference to FIG. 31, a perspective view of the filter head 217 is illustrated. Included as part of filter head 217, in addition to the various flow inlets and the flow outlet, are four equally-spaced projections 231 which extend down from the lower edge 232 of the externally threaded outer annular wall 233. Projections 231 are constructed and arranged to contact the upper or top surface 223 of inner seal 216 as the means of pushing the primary filtering element 164 in a downward direction so as to axially compress support spring 168. This movement of the primary filtering element 164 also moves the by-pass filtering element 165 and establishes greater clearance between the top surface 223 of the inner seal 216 and the lower edge of the nutplate. The installation sequence described for fluid filter 160 and filter head 161 of FIGS. 18-24 is essentially the same for fluid filter 215 and filter head 217 of FIGS. 25-31. The only substantive difference between these two sets of illustrations and the corresponding fluid filters and filter heads is the use of protrusion 192 and bearing surface 204 to push against the inner seal to move the primary filtering element as compared to the use of the four projections 231. The protruding stem 236 of filter head 217 is still inserted into the inner opening 220 and is sized and shaped relative to inner seal 216 so that annular ribs 221 and 222 contact the outside diameter of the protruding stem with a liquid- tight fit so as to create a sealed interface at that location.

The flow openings 228 in the inner seal 216 which connect to the flow channels 229 in the lower (bottom) surface provide a drainage flow path while maintaining a smooth surface for the head projections 231 to bear against during installation. The open spaces 237 which are positioned between each pair of adjacent projections 231 provide four radial flow paths between the filter head 217 and the inner seal 216 after installation (see FIGS. 27 and 28). Prior to fluid filter 215 installation onto filter head 217, the minimal flow clearances provided between the nutplate 163 and the inner seal 216 by openings 228 and channels 229 are adequate for drainage but not adequate to handle the full flow requirements during vehicle operation. Additional clearance areas which are adequate to handle the full flow requirements are created when the filter head pushes the inner seal away from the nutplate.

If the nutplate design of FIGS. 4 and 5 (nutplate 30) or the nutplate 163 of either FIG. 18 or FIG. 25 (same basic design as nutplate 30) is used with a "solid" inner seal, such as inner seal 132, it is possible to completely block off any radial flow between the top surface of the inner seal and the lower edge of the nutplate and thereby effectively "seal" the fluid filter. If in fact inner seal 132 is used, it is important for the circumferential line of contact between the lower annular edge 73 of the nutplate 30 (or 163) to be against the upper surface of the inner seal, either radially inwardly or radially outwardly of the pockets 146. While pockets 146 do not perforate the thickness of inner seal 132, it would be possible for a flow path to be created beneath edge 73 if the nutplate 30 is located so as to circumferentially span the pockets 146. As an alternative, the pockets 146 could be eliminated or in effect filled in so that the inner seal 132 would be completely solid and provide a continuous and smooth and substantially flat top surface in order to make sealing contact with the lower edge of nutplate 30. This arrangement would create a sealed package which would even eliminate the minimal clearance as described herein and designed for drainage.

While the invention has been illustrated and described in detail in the drawings and foregoing description, the same is to be considered as illustrative and not restrictive in character, it being understood that only the preferred embodiments have been shown and described and that all changes and modifications that come within the scope of the protection claimed by the claims are desired to be protected.

## Claims

1. A fluid filter assembly (20, 130, 160, 215) which is constructed and arranged to threadedly mount onto an engine block mounting base (21, 161, 217) and to receive a flow of incoming fluid to be filtered by a filtering element (25, 164) and to discharge said fluid downstream of said filtering element (25, 161), said fluid filter assembly (20, 130, 160, 215) comprising:
an enclosing outer shell (27, 162),
said filtering element (25, 162) being positioned within said enclosing outer shell (27, 164) so as to define an annular clearance space (67), and
a unitary nutplate (30, 131, 163) comprising
a first annular wall portion (52) attached to said enclosing outer shell (27, 162) and
a second annular wall portion (70, 136) located radially inwardly of said first annular wall portion (52), said second annular wall portion (70, 136) being internally threaded for threadedly mounting onto the engine block mounting base (21, 161, 217);
**characterised in that** a connecting annular wall portion is positioned between said first annular wall portion (52) and said second annular wall portion (70, 136), said second annular wall portion (70, 136) being axially spaced from said first annular wall portion (52) and including an edge (73, 138) which defines part of a boundary of a passageway for said flow of incoming fluid whereby said flow of incoming fluid is past or across said edge (73, 138) of said second annular wall portion (70, 136).

2. A fluid filter assembly (20, 130, 160, 215) according to claim 1, wherein the radial distance of separation between an outer surface of said first wall portion (52) and an inner surface (70a) of said second annular wall portion (70, 136) does not exceed 0.5 inches (12.7 mm).

3. Apparatus according to claims 1 or claim 2, wherein said nutplate (30, 131, 163) comprises a sidewall which defines an interior opening, said sidewall being free of any flow passageways therethrough and being constructed and arranged with said first wall portion and said second wall portion (70, 136), said first wall portion including an outer lip portion (52) which is constructed and arranged to be, or which is attached to said outer shell (27, 162) of said fluid filter assembly (20, 130, 160, 215).

4. Apparatus according to claim 3 when appended to claim 2, wherein said outer lip portion (52) has an outer surface which is said outer surface of said first annular wall portion.

5. Apparatus according to claim 3, wherein said sidewall is annular and further includes an internally-threaded wall portion (70a), said outer lip portion (52) having an outer surface and said inner wall portion (70a) having an inner surface, the inner surface of said inner wall portion (70a) having an inside diameter size, the outer surface of said outer lip portion (52) having an outside diameter size, said inside diameter size being at least 75% of said outside diameter size.

6. A fluid filter assembly (20, 130, 160, 215) according to any one of claims 3 to 5, wherein said enclosing outer shell has a formed channel (51); said outer lip portion (52) and said nutplate (30, 131, 163) are securely anchored into said formed channel (51);
an inner seal (29, 132, 166, 216) is positioned between said nutplate (30, 131, 163) and said filtering element(26, 164); and
an outer seal (31, 167) is adapted to be positioned between said engine block mounting base (21, 161, 217) and said nutplate (30, 131, 163) when the fluid filter assembly (20, 130, 160, 215) is threadedly mounted on said engine block mounting base(21, 161, 167).

7. A fluid filter assembly (20, 130, 160, 215) according to claim 6, wherein said inner seal (29, 132, 166, 216) co-operates with said fluid flow edge (73, 138) to define said flow passageway and includes a plurality of flanges (65a-65d, 208a-208c), and between each adjacent pair of flanges (65a-65d, 208a-208c), a flow opening (66a-66d), each of said plurality of flanges (65a-65d, 208a-208c) defining a corresponding proximal surface (83) relative to said unitary nutplate (30, 131, 163) and wherein said fluid flow edge (73, 138) is constructed and arranged in abutting contact against the proximal surface (83) of each of said plurality of flanges(65a-65d, 208a-208c), said flow openings (66a-66d) serving, when the fluid filter assembly (20, 130, 160, 215) is threadedly mounted on said engine block mounting base (21, 161, 167), as a plurality of flow passageways between said engine block mounting base (21, 161, 217) and said annular clearance space (67).

8. A fluid filter assembly (20, 130, 160, 215) according to claim 6 or claim 7, wherein said outer seal (31, 167) includes a pair of spaced-apart ribs (101 and 102) which provide a sealing interface against said engine block mounting base (21, 161, 217), said outer seal (31, 167) further including an outer surface (104) and a mounting base-facing surface (58) and wherein said pair of spaced-apart ribs (101 and 102) include a first annular rib (102) located proximal to said outer surface (104) and a second annular rib (101) located distal to said outer surface (104), relative to said first annular rib (102), said first annular rib (102) having a first axial height relative to said mounting base-facing surface (58) and said second annular rib (101) having a second axial height relative to said mounting base-facing surface (58), said second axial height being dimensionally smaller than said first axial height.

9. A fluid filter assembly (20, 130, 160, 215) according to claim 6, claim 7 or claim 8, wherein said outer seal (31, 167) is of a substantially annular shape and includes a radial lip (100) configured with a plurality of lip sections (113-116) in alternating sequence with a plurality of spaces (117-120).

10. A fluid filter assembly (20, 130, 160, 215) according to any one of claims 6 to 9, wherein said inner seal (29, 132, 166, 216) includes a centre hub and a plurality of radiating flanges (65a-65d, 208a-208c) which extend outwardly, away from said centre hub and which define flow openings between each pair of adjacent radiating flanges (65a-65d, 208a-208c).

11. A fluid filter assembly (160) according to any one of claim 6 to 10, threadedly assembled onto a filter head (161) constructed and arranged with an externally-threaded annular outer wall (199) and an annular inner wall (193)defining a flow opening and including an annular protruding portion (192) and a bearing surface (204) which is positioned radially outwardly of said protruding portion (192);
a support spring (168) axially positioned between said enclosing outer shell (162) and said filtering element (164);
said nutplate (163) assembled onto said filter head (!61) by threaded engagement of its threaded mounting portion (70) with said externally-threaded annular outer wall (199);
said inner seal (166) positioned between said nutplate (163) and said filtering element (164) defining a hollow interior;
said outer seal (167) positioned between said filter head (161) and said nutplate (163); and
wherein the threaded assembly of said nutplate (163) onto said filter head (161) positions said protruding portion (192) in said hollow interior with said bearing surface (204) abutting against said inner seal (166) and said support spring (168) being axially compressed, thereby defining a radial flow path between said inner seal (166) and said nutplate (163) which is created by the axial movement of the filtering element (164) and inner seal (166) away from the nutplate (163).

12. A fluid filter assembly (20, 130, 160, 215) according to any one of claims 6 to 10 threadedly assembled onto a filter head (21, 161, 217) constructed and arranged with an externally-threaded outer wall (48, 199, 233) and an inner wall (47, 193, 236) defining a flow opening and including a protruding portion (192) and a bearing surface (204);
support means (28, 168) axially positioned between said outer shell (27, 162) and said filtering element (25, 164) for permitting axial movement of said filtering element (25, 164);
said nutplate (30, 131, 163) having its threaded mounting portion (70, 136) assembled onto said filter head (21, 161, 217) by threaded engagement;
said inner seal (29, 132, 166, 216) positioned between said nutplate (30, 131, 163) and said filter element (25, 164) defining a hollow interior; and
wherein the threaded assembly of said nutplate (30, 131, 163) onto said filter head (21, 161, 217) positions said protruding portion (192) in said hollow interior with said bearing surface (204) abutting against said inner seal (29, 132, 166, 216) and said support means (28, 168) being axially compressed, thereby defining a radial flow path between said inner seal (29, 132, 166, 216) and said nutplate (30, 131, 163) which is created by the axial movement of the filtering element (25, 164) and inner seal (29, 132, 166, 216) away from the nutplate (30, 131, 163).

13. A fluid filter assembly (215) according to any one of claims 6 to 10, threadedly assembled onto a filter head (217) constructed and arranged with an inner wall (236) defining a flow opening and an externally-threaded outer wall (233) which is constructed and arranged with a plurality of axially-extending projections (231); said fluid filter (215) comprising:
support means (168) axially positioned between said outer shell (162) and said filtering element (215) for permitting axial movement of said filtering element (215);
said nutplate (163) having its threaded mounting portion (70) assembled onto said filter head (217) by threaded engagement;
said inner seal (216) positioned between said nutplate (163) and said filtering element (215) defining a hollow interior; and
wherein the threaded assembly of said nutplate (163) onto said filter head (217) positions said protruding portion in said hollow interior with said plurality of axially-extending projections (231) abutting against said inner seal (216) and said support means (168) being axially compressed, thereby defining a radial flow path between said inner seal (216) and said nutplate (163) which is created by the axial movement of the filtering element (215) and inner seal (216) away from the nutplate (163).

14. A fluid filter assembly (20, 130, 160, 215) assembled onto a filter head (21, 161, 217) according to any one of claims 10 to 12 wherein said filter head (21, 161, 217) includes an outer flange (197) and said outer wall (48, 199, 233) is axially positioned between said outer flange (197) and said protruding portion (192).

15. A fluid filter assembly (20, 130, 160, 215) according to any one of claims 6 to 10, threadedly assembled onto a filter head (21, 161, 217) constructed and arranged with an outer flange portion (197), an externally-threaded outer wall (48, 199, 233) an inner wall (47, 193, 236) defining a flow opening, and a bearing surface (204);
said fluid filter (20, 130, 160, 215) comprising:
support means (28, 168) axially positioned between said outer shell (27, 162) and said filtering element (25, 164) for permitting axial movement of said filtering element (25, 164);
said nutplate (30, 131, 163) having its threaded mounting portion (70, 136) assembled onto said filter head (21, 161, 217) by threaded engagement;
said inner seal (29, 132, 166, 216) positioned between said nutplate (30, 131, 163) and said filtering element (25, 164) being constructed and arranged to be placed in abutting contact with said bearing surface (204);
said outer seal (31, 167) positioned between said filter head (21, 161, 217) and said nutplate (30, 131, 163) being constructed and arranged to be placed in abutting contact with said outer flange portion (197); and
wherein the filter head (21, 161, 217) and the fluid filter assembly (20, 130, 160, 215) are constructed and arranged to be assembled to each other with threaded engagement between the externally-threaded outer wall (48, 199, 233) and the nutplate (30, 131, 163) occurring prior to any contact between the bearing surface (204) and the inner seal (29, 132, 166, 216), contact between the bearing surface (204) and the inner seal (29, 132, 166, 216) occurring prior to any contact between the outer seal (31, 167) and the outer flange portion (197).

16. A fluid filter assembly (20, 130, 160, 215) assembled onto a filter head (21, 161, 217) according to claim 15, wherein said outer flange (197) defines an annular channel (60, 198) which receives said outer seal (31, 167).

17. A fluid filter assembly (20, 130, 160, 215) assembled onto a filter head (21, 161, 217) according to claim 11, claim 12 or claim 13, wherein said inner seal (29, 132, 166, 216) includes a plurality of outwardly-radiating flanges (65a-65d, 208a-208c).

18. A fluid filter assembly (20, 160) assembled onto a filter head (21, 161) according to claim 12 or claim 14 wherein said inner seat (29, 166) includes an upper surface which defines a plurality a flow openings (66a-66d).

19. A spin-on filter unitary nutplate (30, 131, 163) for providing a mounting interface between an engine block mounting base (21, 161, 217) and the remainder of a spin-on fluid filter assembly (20, 130, 160, 215) according to claim 2, or any one of claims 3 to 18 when appended to claim 2, said spin-on filter unitary nutplate (30, 131, 163) comprising:
a first annular wall portion (52) constructed and arranged to be attached to an outer shell (27, 162) of the spin-on fluid filter assembly (20, 130, 160, 215);
a second annular wall portion (70, 136) constructed and arranged to be located radially inwardly of said first annular wall portion (52), said second annular wall portion (70, 136) being internally threaded for threadedly mounting onto an engine block mounting base (21, 161, 217);
**characterized in that** a connecting annular wall portion is positioned between said first annular wall portion (52) and said second annular wall portion (70, 136) and is free of any flow inlet holes, said second annular wall portion (70, 136) being axially spaced from said first annular wall portion (52) and including an edge (73, 138) which is adapted to define part of a boundary of a passageway for said flow of incoming oil when said spin-on filter unitary nutplate (30, 131, 163) is fitted into said spin-on fluid filter assembly (20, 130, 160, 215) such that said flow of incoming oil is past or across said edge (73, 138) of said second annular wall portion (70, 136), and **in that** the radial distance of separation between an outer surface of said first annular wall portion (52) and an inner surface (70a) of said second annular wall portion (70, 136) does not exceed 0.5 inches (12.7mm).

20. A unitary nutplate (30, 131, 163) according to claim 19 wherein said second annular wall portion (70, 136) includes a plurality of spacer tabs (137) extending axially away from said first annular wall portion (52).

## Revendications

1. Un ensemble filtre à fluide (20, 130, 160, 215) qui est réalisé et disposé pour un montage par vissage sur une base de montage (21, 160, 217) d'un bloc moteur et pour recevoir un écoulement de fluide arrivant devant être filtré par un élément de filtrage (25, 164) et pour évacuer ledit fluide à l'aval dudit élément de filtrage (25, 161), ledit ensemble filtre à fluide (20, 130, 160, 215) comprenant :
- un boîtier externe (25, 162), ledit élément de filtrage (25, 162) étant mis en place à l'intérieur dudit boîtier externe (27, 164) de manière à définir un espace annulaire (67), et
- une plaque écrou unitaire (30, 131, 163) comprenant :
une première partie de paroi annulaire (52) fixée audit boîtier externe (27, 162) et
une seconde partie de paroi annulaire (70, 136) située radialement vers l'intérieur de ladite première partie de paroi annulaire (52), ladite seconde partie de paroi annulaire (70, 136) étant filetée intérieurement pour un montage par vissage sur la base de montage (21, 161, 217) du bloc moteur ;
**caractérisé en ce qu'**une partie de paroi annulaire de liaison est mise en place entre ladite première partie de paroi annulaire (52) et ladite seconde partie de paroi annulaire (70, 136), ladite seconde partie de paroi annulaire (70, 136) étant écartée axialement de ladite première partie de paroi annulaire (52) et comprenant un bord (73, 138) qui définit une partie d'une limite d'une voie de passage pour ledit écoulement de fluide arrivant de sorte que ledit écoulement de fluide arrivant est au-delà ou aux bornes dudit bord (73, 138) de ladite seconde partie de paroi annulaire (70, 136).

2. Un ensemble filtre à fluide (20, 130, 160, 215) selon la revendication 1, dans lequel la distance radiale de séparation entre une surface externe de ladite première partie de paroi (52) et une surface interne (70a) de ladite seconde partie de paroi annulaire (70, 136) ne dépasse pas 0,5 pouces (12,7 mm).

3. Dispositif selon la revendication 1 ou la revendication 2, dans lequel ladite plaque écrou (30, 131, 163) comprend une paroi latérale qui définit une ouverture intérieure, ladite paroi latérale étant exempte de toute voie de passage d'écoulement à travers elle et étant réalisée et disposée avec ladite première partie de paroi et ladite seconde partie de paroi (70, 136), ladite première partie de paroi comprenant une partie de lèvre externe (52) qui est réalisée et disposée pour être, ou qui est fixée audit boîtier externe (27, 162) dudit ensemble filtre à fluide (20, 130, 160, 215).

4. Dispositif selon la revendication 3 lorsqu'elle dépend de la revendication 2, dans lequel ladite partie de lèvre externe (52) présente une paroi externe qui est ladite paroi externe de ladite première partie de paroi annulaire.

5. Dispositif selon la revendication 3, dans lequel ladite paroi latérale est annulaire et comprend en outre une partie de paroi filetée intérieurement (70a), ladite partie de lèvre externe (52) présentant une surface externe et ladite partie de paroi interne (70a) présentant une surface interne, la surface interne de ladite partie de paroi interne (70a) présentant une dimension de diamètre interne, la surface externe de ladite partie de lèvre externe (52) présentant une dimension de diamètre externe, ladite dimension de diamètre interne étant d'au moins 75% de ladite dimension de diamètre externe.

6. Un ensemble filtre à fluide (20, 130, 160, 215) selon l'une quelconque des revendications 3 à 5, dans lequel ledit boîtier externe comprend une gorge préformée (51) ; ladite partie de lèvre externe (52) et ladite plaque écrou (30, 131, 163) sont fermement ancrées dans ladite gorge préformée (51) ;
un joint interne (29, 132, 166, 216) est mis en place entre ladite plaque écrou (30, 131, 163) et ledit élément de filtrage (26, 164) ; et
un joint externe (31, 167) est adapté pour être mise en place entre ladite base de montage (21, 161, 217) du bloc moteur et ladite plaque écrou (30, 131, 163) lorsque l'ensemble filtre à fluide (20, 130, 160, 213) est monté par vissage sur ladite base de montage (21, 161, 167) du bloc moteur.

7. Un ensemble filtre à fluide (20, 130, 160, 215) selon la revendication 6, dans lequel ledit joint interne (29, 132, 166, 216) coopère avec ledit bord d'écoulement de fluide (73, 138) pour définir ladite voie de passage d'écoulement et comprend une pluralité de brides (62a-65d, 208a-208c) et, entre chaque paire adjacente de brides (65a-65d, 208a-208c), une ouverture d'écoulement (66a-66d), chacune de ladite pluralité de brides (65a-65d, 208a-208c) définissant une surface proximale correspondante (83) par rapport à ladite plaque écrou unitaire (30, 131, 163) et dans lequel ledit bord d'écoulement de fluide (73, 138) est réalisé et disposé en contact de butée contre la surface proximale (83) de chacune de ladite pluralité de brides (65a-65d, 208a-208c), lesdites ouvertures d'écoulement (66a-66d) servant, lorsque l'ensemble filtre à fluide (20, 130, 160, 215) est monté par vissage sur ladite base de montage (21, 161, 167) du bloc moteur, comme une pluralité de voies de passage d'écoulement entre ladite base de montage (21, 161, 217) du bloc moteur et ledit espace annulaire (67).

8. Un ensemble filtre à fluide (20, 130, 160, 215) selon la revendication 6 ou la revendication 7, dans lequel ledit joint externe (31, 167) comprend une paire de nervures écartées l'une de l'autre (101 et 102) qui fournit une interface d'étanchéité contre ladite base de montage (21, 161, 217) du bloc moteur, ledit joint externe (31, 167) comprenant en outre une surface externe (104) et une surface dirigée vers la base de montage (58) et dans lequel ladite paire de nervures écartées l'une de l'autre (101 et 102) comprend une première nervure annulaire (102) située de manière proximale à ladite surface externe (104) et une seconde nervure annulaire (101) située de manière distale à ladite surface externe (104) par rapport à ladite première nervure annulaire (102), ladite première nervure annulaire (102) ayant une première hauteur axiale par rapport à ladite surface dirigée vers la base de montage (58) et ladite seconde nervure annulaire (101) ayant une seconde hauteur axiale par rapport à ladite surface dirigée vers la base de montage (58), ladite seconde hauteur axiale étant dimensionnellement plus petite que ladite première hauteur axiale.

9. Un ensemble filtre à fluide (20, 130, 160, 215) selon la revendication 6, la revendication 7 ou la revendication 8, dans lequel ledit joint externe (31, 167) est d'une forme sensiblement annulaire et comprend une lèvre radiale (100) configurée avec une pluralité de sections de lèvres (113-116) en séquence alternée avec une pluralité d'espaces (117-120).

10. Un ensemble filtre à fluide (20, 130, 160, 215) selon une quelconque des revendications 6 à 9, dans lequel ledit joint interne (29, 132, 166, 216) comprend un moyeu central et une pluralité de brides rayonnantes (65a-65d, 208a-208c) qui s'étendent vers l'extérieur, en s'éloignant dudit moyeu central et qui définissent des ouvertures d'écoulement entre chaque paire de brides rayonnantes (65a-65d, 208a-208c).

11. Un ensemble filtre à fluide (160) selon l'une quelconque des revendications 6 à 10, assemblé par vissage sur une tête de filtre (161) réalisée et disposée avec une paroi externe annulaire filetée extérieurement (199) et une paroi interne annulaire (193) définissant une ouverture d'écoulement et comprenant une partie annulaire saillante (192) et une surface d'appui (204) qui est mise en place radialement vers l'extérieur de ladite partie saillante (192) ;
un ressort de support (168) mis en place axialement entre ledit boîtier externe (162) et ledit élément de filtrage (164) ;
ladite plaque écrou (163) assemblée sur ladite tête de filtre (161) par engagement fileté de sa partie de montage filetée (70) avec ladite partie de paroi externe annulaire filetée extérieurement (199) ;
ledit joint interne (160) mis en place entre ladite plaque écrou (163) et ledit élément de filtrage (164) définissant un intérieur creux ;
ledit joint externe (167) mis en place entre ladite tête de filtre (161) et ladite plaque écrou (163) ; et
dans lequel ledit ensemble fileté de ladite plaque écrou (163) sur ladite tête de filtre (161) met en place ladite partie saillante (192) dans ledit intérieur creux avec ladite surface d'appui (204) venant en butée contre ledit joint interne (166) et ledit ressort de support (168) étant comprimé axialement, en définissant ainsi un trajet d'écoulement radial entre ledit joint interne (166) et ladite plaque écrou (163) qui est créé par le mouvement axial de l'élément de filtrage (164) et du joint interne (166) en s'éloignant de la plaque écrou (163).

12. Un ensemble filtre à fluide (20, 130, 160, 215) selon l'une quelconque des revendications 6 à 10, assemblé par vissage sur une tête de filtre (21, 161, 217) réalisée et disposée avec une paroi externe filetée extérieurement (48, 199, 233) et une paroi interne (47, 193, 236) définissant une ouverture d'écoulement et comprenant une partie saillante (192) et une surface d'appui (204) ;
des moyens de support (28, 168) mis en place axialement entre ledit boîtier externe (27, 162) et ledit élément de filtrage (25, 164) pour permettre un mouvement axial dudit élément de filtrage (25, 164) ;
ladite plaque écrou (30, 131, 163) présentant sur ladite tête de filtre (21, 161,217) sa partie de montage filetée (70, 136) assemblée par engagement fileté ;
ledit joint interne (29, 132, 166, 216) mis en place entre ladite plaque écrou (30, 131, 163) et ledit élément de filtrage (25, 164) définissant un intérieur creux ; et
dans lequel l'ensemble fileté de ladite plaque écrou (30, 131, 163) sur ladite tête de filtre (21, 161, 217) met en place ladite partie saillante (192) dans ledit intérieur creux avec ladite surface d'appui (204) qui vient en butée contre ledit joint interne (29, 132, 166, 216) et lesdits moyens de support (28, 168) étant comprimés axialement, en définissant ainsi un trajet d'écoulement radial entre ledit joint interne (29, 132, 166, 216) et ladite plaque écrou (30, 131, 163) qui est créé par le mouvement axial de l'élément de filtrage (25, 164) et du joint interne (29, 132, 166, 216) en s'éloignant de la plaque écrou (30, 131, 163).

13. Un ensemble filtre à fluide (215) selon l'une quelconque des revendications 6 à 10, assemblé par vissage sur une tête de filtre (217) réalisée et disposée avec une paroi interne (236) définissant une ouverture d'écoulement et une paroi externe filetée extérieurement (233) qui est réalisée et disposée avec une pluralité de saillies s'étendant axialement (231) ; ledit filtre à fluide (215) comprenant :
des moyens de support (168) mis en place axialement entre ledit boîtier externe (162) et ledit élément de filtrage (215) pour permettre un mouvement axial dudit élément de filtrage (215) ;
ladite plaque écrou (163) présentant sa partie de montage filetée (70) assemblée sur ladite tête de filtre (217) par engagement fileté ;
ledit joint interne (216) mis en place entre ladite plaque écrou (163) et ledit élément de filtrage (215) définissant un intérieur creux ; et
dans lequel l'ensemble fileté de ladite plaque écrou (163) sur ladite tête de filtre (217) met en place ladite partie saillante dans ledit intérieur creux avec ladite pluralité de saillies s'étendant axialement (231) qui viennent en butée contre ledit joint interne (216) et lesdits moyens de support (168) étant comprimés axialement, en définissant ainsi un trajet d'écoulement radial entre ledit joint interne (216) et ladite plaque écrou (163) qui est créé par le mouvement axial de l'élément de filtrage (215) et du joint interne (216) en s'éloignant de la plaque écrou (163).

14. Un ensemble filtre à fluide (20, 130, 160, 215) assemblé sur une tête de filtre (21, 161, 217) selon l'une quelconque des revendications 10 à 12, dans lequel ladite tête de filtre (21, 161, 217) comprend une bride externe (197) et ladite paroi externe (48, 199, 233) est mise en place axialement entre ladite bride externe (197) et ladite partie saillante (192).

15. Un ensemble filtre à fluide (20, 130, 160, 215) selon l'une quelconque des revendications 6 à 10, assemblé par vissage sur une tête de filtre (21, 161, 217) réalisée et disposée avec une partie de bride externe (197), une paroi externe filetée extérieurement (48, 199, 233), une paroi interne (47, 193, 236) définissant une ouverture d'écoulement, et une surface d'appui (204) ;
ledit filtre à fluide (20, 130, 160, 215) comprenant :
des moyens de support (28, 168) mis en place axialement entre ledit boîtier externe (27, 162) et lesdits éléments de filtrage (25, 164) pour permettre un mouvement axial dudit élément de filtrage (25, 164) ;
ladite plaque écrou (30, 131, 163) présentant sa partie de montage filetée (70, 136) assemblée sur ladite tête de filtre (21, 161, 217) par engagement fileté ;
ledit joint interne (29, 132, 166, 216) mis en place entre ladite plaque écrou (30, 131, 163) et ledit élément de filtrage (25, 164) étant réalisé et disposé pour être placé en contact de butée avec ladite surface d'appui (204) ;
ledit joint externe (31, 167) mis en place entre ladite tête de filtre (21, 161, 217) et ladite plaque écrou (30, 131, 163) étant réalisé et disposé pour être placé en contact de butée avec ladite partie de bride externe (197) ; et
dans lequel la tête de filtre (21, 161, 217) et l'ensemble filtre à fluide (20, 130, 160, 215) sont réalisés et disposés pour être assemblés l'un avec l'autre avec engagement fileté entre la paroi filetée extérieurement (48, 199, 233) et la plaque écrou (30, 131, 163) se produisant avant un quelconque contact entre la surface d'appui (204) et le joint interne (29, 132, 166, 216), le contact entre la surface d'appui (204) et le joint interne (29, 132, 166, 216) se produisant avant un quelconque contact entre le joint externe (31, 167) et la partie de bride externe (197).

16. Un ensemble filtre à fluide (20, 130, 160, 215) assemblé sur une tête de filtre (21, 161, 217) selon la revendication 15, dans lequel ladite bride externe (197) définit une gorge annulaire (60, 198) qui reçoit ledit joint externe (31, 167).

17. Un ensemble filtre à fluide (20, 130, 160, 215) assemblé sur une tête de filtre (21, 161, 217) selon la revendication 11, la revendication 12 ou la revendication 13, dans lequel ledit joint interne (29, 132, 166, 216) comprend une pluralité de brides rayonnant vers l'extérieur (65a-65d, 208a-208c).

18. Un ensemble filtre à fluide (20, 160) assemblé sur une tête de filtre (21, 161) selon la revendication 12 ou la revendication 14, dans lequel ledit joint interne (29, 166) comprend une surface supérieure qui définit une pluralité d'ouvertures d'écoulement (66a-66d).

19. Une plaque écrou unitaire de filtre amovible (30, 131, 163) pour créer une interface de montage entre la base de montage (21, 161, 217) d'un bloc moteur et le reste d'un ensemble filtre amovible à fluide (20, 130, 160, 215) selon la revendication 2, ou l'une quelconque des revendications 3 à 18 lorsqu'elles dépendent de la revendication 2, ladite plaque écrou unitaire de filtre amovible (30, 131, 163) comprenant :
une première partie de paroi annulaire (52) réalisée et disposée pour être fixée à un boîtier externe (27, 162) de l'ensemble filtre amovible à fluide (20, 130, 160, 215) ;
une seconde partie de paroi annulaire (70, 136) réalisée et disposée pour être située radialement vers l'intérieur de ladite première partie de paroi annulaire (52), ladite seconde partie de paroi annulaire (70, 136) étant filetée intérieurement pour être montée par vissage sur la base de montage (21, 161, 217) d'un bloc moteur ;
**caractérisé en ce qu'**une partie de paroi annulaire de liaison est mise en place entre ladite première partie de paroi annulaire (52) et ladite seconde partie de paroi annulaire (70, 136) et est exempte de quelconques trous d'entrée d'écoulement, ladite seconde partie de paroi annulaire (70, 136) étant écartée axialement de ladite première partie de paroi annulaire (52) et comprenant un bord (73, 138) qui est adapté pour définir une partie d'une limite d'une voie de passage pour ledit écoulement de l'huile arrivant lorsque ladite plaque écrou unitaire de filtre amovible (30, 131, 163) est montée dans ledit ensemble filtre amovible à fluide (20, 130, 160, 215) de telle manière que ledit écoulement d'huile arrivant est au-delà ou aux bornes dudit bord (73, 138) de ladite seconde partie de paroi annulaire (70, 136), et **en ce que** la distance radiale de séparation entre une surface externe de ladite première partie de paroi annulaire (52) et une surface interne (70a) de ladite seconde partie de paroi annulaire (70, 136) ne dépasse pas 0,5 pouces (12,7 mm) .

20. Une plaque écrou unitaire (30, 131, 163) selon la revendication 19, dans laquelle ladite seconde partie de paroi annulaire (70, 136) comprend une pluralité de pattes formant écarteur (137) s'étendant axialement en s'éloignant de ladite première partie de paroi annulaire (52).

## Patentansprüche

1. Flüssigkeitsfilter (20, 130, 160, 215), der ausgebildet und angeordnet ist, um an einen Befestigungssockel (21, 161, 217) eines Motorblockes angeschraubt zu werden und um einen Strom hereinkommender Flüssigkeit, die von einem Filterelement (25, 164) zu filtern ist, zu empfangen und diese Flüssigkeit stromabwärts des Filterelements (25, 161) auszulassen, wobei der Filter (20, 130, 160, 215) folgendes aufweist:
einen umschließenden äußeren Mantel (27, 162),
wobei das Filterelement (25, 162) in dem umschließenden äußeren Mantel (27, 164) angeordnet ist, um einen ringförmigen Freiraum (67) zu bilden, und
eine einteilige Mutterplatte (30, 131, 163),
die einen an dem umschließenden äußeren Mantel (27, 162) befestigten ersten ringförmigen Wandabschnitt (52) und
einen radial innerhalb des ersten ringförmigen Wandabschnittes (52) angeordneten zweiten ringförmigen Wandabschnitt (70, 136) aufweist, wobei der zweite ringförmige Wandabschnitt (70, 136) ein Innengewinde aufweist, um auf den Befestigungssockel (21, 161, 217) des Motorblockes aufgeschraubt zu werden;
**dadurch gekennzeichnet, daß** ein verbindender ringförmiger Wandabschnitt zwischen dem ersten ringförmigen Wandabschnitt (52) und dem zweiten ringförmigen Wandabschnitt (70, 136) angeordnet ist, wobei der zweite ringförmige Wandabschnitt (70, 136) axial von dem ersten ringförmigen Wandabschnitt (52) beabstandet ist und eine Kante (73, 138) enthält, die einen Teil einer Begrenzung eines Durchganges für den hereinkommenden Flüssigkeitsstrom bildet, wodurch der hereinkommende Flüssigkeitsstrom an der Kante (73, 138) des zweiten ringförmigen Wandabschnittes (70, 138) vorbei oder über sie hinweg geht.

2. Flüssigkeitsfilter (20, 130, 160, 215) nach Anspruch 1, bei dem der radiale Trennungsabstand zwischen einer äußeren Oberfläche des ersten Wandabschnittes (52) und einer inneren Oberfläche (70a) des zweiten ringförmigen Wandabschnittes (70, 136) 0,5 Zoll (12,7 mm) nicht übersteigt.

3. Vorrichtung nach Anspruch 1 oder Anspruch 2, bei der die Mutterplatte (30, 131, 163) eine Seitenwand aufweist, die eine Innenöffnung begrenzt, wobei die Seitenwand frei von jeglichen Strömungsdurchgängen durch sie ist und mit dem ersten Wandabschnitt und dem zweiten Wandabschnitt (70, 136) ausgebildet und angeordnet ist, wobei der erste Wandabschnitt einen äußeren Lippenteil (52) enthält, der ausgebildet und angeordnet ist, um der äußere Mantel (27, 162) des Filters (20, 130, 160, 215) zu sein, oder der an dem äußeren Mantel (27, 162) des Filters (20, 130, 160, 215) befestigt ist.

4. Vorrichtung nach Anspruch 3, wenn rückbezogen auf Anspruch 2, bei der der äußere Lippenteil (52) eine äußere Oberfläche hat, die die äußere Oberfläche des ersten ringförmigen Wandabschnittes ist.

5. Vorrichtung nach Anspruch 3, bei der die Seitenwand ringförmig ist und ferner einen ein Innengewinde aufweisenden Wandabschnitt (70a) enthält, wobei der äußere Lippenteil (52) eine äußere Oberfläche hat und der innere Wandabschnitt (70a) eine innere Oberfläche hat, wobei die innere Oberfläche des inneren Wandabschnittes (70a) eine Innendurchmessergröße hat, die äußere Oberfläche des äußeren Lippenteils (52) eine Außendurchmessergröße hat, wobei die Innendurchmessergröße mindestens 75 % der Außendurchmessergröße ist.

6. Flüssigkeitsfilter (20, 130, 160, 215) nach irgendeinem der Ansprüche 3 bis 5, bei dem der umschließende äußere Mantel einen geformten Kanal (51) hat, der äußere Lippenteil (52) und die Mutterplatte (30, 31, 63) fest in dem geformten Kanal (51) verankert sind,
eine innere Dichtung (29, 132, 166, 216) zwischen der Mutterplatte (30, 131, 163) und dem Filterelement (26, 164) angeordnet ist; und
eine äußere Dichtung (31, 167) angepaßt ist, um zwischen dem Befestigungssockel (21, 161, 217) des Motorblockes und der Mutterplatte (30, 131, 163) angeordnet zu werden, wenn der Flüssigkeitsfilter (20, 130, 160, 215) auf den Befestigungssockel (21, 161, 167) des Motorblockes aufgeschraubt wird.

7. Flüssigkeitsfilter (20, 130, 160, 215) nach Anspruch 6, bei dem die innere Dichtung (29, 132, 166, 216) mit der Flüssigkeitsströmungskante (73, 138) zusammenwirkt, um den Strömungsdurchgang zu begrenzen, und eine Vielzahl von Flanschen (65a-65d, 208a-208c) und zwischen jeweils zwei benachbarten Flanschen (65a-65d, 208a-208c) eine Strömungsöffnung (66a-66d) enthält, wobei jeder der Flansche (65a-65d, 208a-208c) eine entsprechend benachbarte Oberfläche (83) relativ zu der einteiligen Mutterplatte (30, 131, 163) bildet, und bei dem die Flüssigkeitsströmungskante (73, 138) einen Stoßkontakt mit der benachbarten Oberfläche (83) von jedem der Flansche (65a-65d, 208a-208c) hat, wobei die Strömungsöffnungen (66a-66d) als eine Vielzahl von Strömungsdurchgängen zwischen dem Befestigungssockel (21, 161, 217) des Motorblockes und dem ringförmigen Freiraum (67) dienen, wenn der Flüssigkeitsfilter (20, 30, 160, 215) auf den Befestigungssockel (21, 161, 167) des Motorblockes aufgeschraubt ist.

8. Flüssigkeitsfilter (20, 130, 160, 215) nach Anspruch 6 oder Anspruch 7, bei dem die äußere Dichtung (31, 167) ein Paar beabstandeter Rippen (101 und 102) enthält, die eine Dichtfläche gegen den Befestigungssockel (21, 161, 217) des Motorblockes bereitstellen, wobei die äußere Dichtung (31, 167) ferner eine äußere Oberfläche (104) und eine dem Befestigungssockel zugekehrte Oberfläche (58) enthält, und bei dem die beiden beabstandeten Rippen (101 und 102) eine erste ringförmige Rippe (102), die benachbart zu der äußeren Oberfläche (104) angeordnet ist, und eine zweite ringförmige Rippe (101), die von der äußeren Oberfläche (104) relativ zu der ersten ringförmigen Rippe (102) entfernt angeordnet ist, enthalten, wobei die erste ringförmige Rippe (102) eine erste axiale Höhe relativ zu der dem Befestigungssockel zugekehrten Oberfläche (58) hat und die zweite ringförmige Rippe (101) eine zweite axiale Höhe relativ zu der dem Befestigungssockel zugekehrten Oberfläche (58) hat, wobei die zweite axiale Höhe ein kleineres Maß als die erste axiale Höhe hat.

9. Flüssigkeitsfilter (20, 130, 160, 215) nach Anspruch 6, Anspruch 7 oder Anspruch 8, bei dem die äußere Dichtung (31, 167) eine im wesentlichen ringförmige Form hat und eine radiale Lippe (100) enthält, die mit einer Vielzahl von Lippenabschnitten (113-116) in wechselnder Folge mit einer Vielzahl von Räumen (117-120) ausgebildet ist.

10. Flüssigkeitsfilter (20, 130, 160, 215) nach irgendeinem der Ansprüche 6 bis 9, bei dem die innere Dichtung (29, 132, 166, 216) eine zentrale Nabe und eine Vielzahl von sich radial ausbreitenden Flanschen (65a-65d, 208a-208c) enthält, die sich von der zentralen Nabe aus nach außen erstrecken und Strömungsöffnungen zwischen jeweils zwei benachbarten, sich radial ausbreitenden Flanschen (65a-65d, 208a-208c) begrenzen.

11. Flüssigkeitsfilter (160) nach irgendeinem der Ansprüche 6 bis 10, der auf einen Filterkopf (161) geschraubt ist, der mit einer ein Außengewinde aufweisenden ringförmigen äußeren Wand (199) und einer ringförmigen inneren Wand (193) ausgebildet und angeordnet ist, die eine Strömungsöffnung begrenzt und einen ringförmigen vorstehenden Abschnitt (192) und eine Lagerfläche (204) enthält, die radial außerhalb des vorspringenden Abschnittes (192) angeordnet ist;
mit einer Stützfeder (168), die axial zwischen dem umschließenden äußeren Mantel (162) und dem Filterelement. (164) angeordnet ist;
wobei die Mutterplatte (163) durch Schraubeingriff ihres mit einem Gewinde versehenen Befestigungsabschnittes (70) mit der ein Außengewinde aufweisenden ringförmigen äußeren Wand (199) an dem Filterkopf (161) angebracht ist;
wobei die innere Dichtung (166) zwischen der Mutterplatte (163) und dem Filterelement (164) angeordnet ist, das einen inneren Hohlraum begrenzt;
wobei die äußere Dichtung (167) zwischen dem Filterkopf (161) und der Mutterplatte (163) angeordnet ist; und
bei dem die Schraubbefestigung der Mutterplatte (163) auf dem Filterkopf (161) den vorspringenden Abschnitt (192) in dem inneren Hohlraum anordnet, wobei die Lagerfläche (204) an der inneren Dichtung (166) anstößt und die Stützfeder (168) axial zusammengedrückt wird und dadurch ein radialer Strömungsweg zwischen der inneren Dichtung (166) und der Mutterplatte (163) begrenzt wird, der durch die axiale Bewegung des Filterelements (164) und der inneren Dichtung (166) weg von der Mutterplatte (163) geschaffen wird.

12. Flüssigkeitsfilter (20, 130, 160, 215) nach irgendeinem der Ansprüche 6 bis 10, der auf einen Filterkopf (21, 161, 217) geschraubt ist, der mit einer ein Außengewinde aufweisenden äußeren Wand (48, 199, 233) und einer inneren Wand (47, 193, 236), die eine Strömungsöffnung begrenzt und einen vorspringenden Abschnitt (192) und eine Lagerfläche (204) enthält, ausgebildet und angeordnet ist;
mit einer Stützeinrichtung (28, 168), die axial zwischen dem äußeren Mantel (27, 162) und dem Filterelement (25, 164), um dem Filterelement (25, 164) eine axiale Bewegung zu gestatten, angeordnet ist;
wobei der mit einem Gewinde versehene Befestigungsabschnitt (70, 136) der Mutterplatte (30, 131, 163) durch Schraubeingriff auf dem Filterkopf (21, 161, 217) befestigt ist;
wobei die innere Dichtung (29, 132, 166, 216) zwischen der Mutterplatte (30, 131, 163) und dem Filterelement (25, 164) angeordnet ist, das einen inneren Hohlraum begrenzt; und
bei dem die Schraubbefestigung der Mutterplatte (30, 131, 163) auf dem Filterkopf den vorspringenden Abschnitt (192) in dem inneren Hohlraum anordnet, wobei die Lagerfläche (204) an der inneren Dichtung (29, 132, 166, 216) anstößt und die Stützeinrichtung (28, 168) axial zusammengedrückt wird und dadurch ein radialer Strömungsweg zwischen der inneren Dichtung (29, 132, 166, 216) und der Mutterplatte (30, 131, 163) begrenzt wird, der durch die axiale Bewegung des Filterelements (25, 164) und der inneren Dichtung (29, 132, 166, 216) weg von der Mutterplatte (30, 131, 163) geschaffen wird.

13. Flüssigkeitsfilter (215) nach irgendeinem der Ansprüche 6 bis 10, der auf einen Filterkopf (217) geschraubt ist, der mit einer inneren Wand (236), die eine Strömungsöffnung begrenzt, und einer mit einem Außengewinde versehenen äußeren Wand (233) ausgebildet und angeordnet ist, die mit einer Vielzahl von axial verlaufenden Vorsprüngen (231) ausgebildet und angeordnet ist; wobei der Flüssigkeitsfilter (215) folgendes umfaßt:
eine Stützeinrichtung (168), die axial zwischen dem äußeren Mantel (162) und dem Filterelement (215) angeordnet ist, um dem Filterelement (215) eine axiale Bewegung zu gestatten;
wobei der mit einem Gewinde versehene Befestigungsabschnitt (70) der Mutterplatte (163) durch Schraubeingriff auf dem Filterkopf (217) befestigt ist;
wobei die innere Dichtung (216) zwischen der Mutterplatte (163) und dem Filterelement (215) angeordnet ist, das einen inneren Hohlraum begrenzt; und
bei dem die Schraubbefestigung der Mutterplatte (163) auf dem Filterkopf (217) den vorspringenden Abschnitt in dem inneren Hohlraum anordnet, wobei die Vielzahl von axial verlaufenden Vorsprüngen (231) an der inneren Dichtung (216) anstoßen und die Stützeinrichtung (168) axial zusammengedrückt wird und dadurch ein radialer Strömungsweg zwischen der inneren Dichtung (216) und der Mutterplatte (163) begrenzt wird, der durch die axiale Bewegung des Filterelements (215) und der inneren Dichtung (216) weg von der Mutterplatte (163) geschaffen wird.

14. Flüssigkeitsfilter (20, 130, 160, 215), der an einem Filterkopf (21, 161, 217) befestigt ist, gemäß irgendeinem der Ansprüche 10 bis 12, bei dem der Filterkopf (21, 161, 217) einen äußeren Flansch (197) beinhaltet und die äußere Wand (48, 199, 233) axial zwischen dem äußeren Flansch (197) und dem vorspringenden Abschnitt (192) angeordnet ist.

15. Flüssigkeitsfilter (20, 130, 160, 215) nach irgendeinem der Ansprüche 6 bis 10, der auf einen Filterkopf (21, 161, 217) aufgeschraubt ist, der mit einem äußeren Flanschabschnitt (197), einer mit einem Außengewinde versehenen äußeren Wand (48, 199, 233), einer inneren Wand (47, 193, 236), die eine Strömungsöffnung begrenzt, und einer Lagerfläche (204) ausgebildet und angeordnet ist;
wobei der Flüssigkeitsfilter (20, 130, 160, 215) folgendes umfaßt:
eine Stützeinrichtung (28, 168), die axial zwischen dem äußeren Mantel (27, 162) und dem Filterelement (25, 164) angeordnet ist, um dem Filterelement (25, 164) eine axiale Bewegung zu gestatten;
wobei der mit einem Gewinde versehene Befestigungsabschnitt (70, 136) der Mutterplatte (30, 131, 163) durch Schraubeingriff auf dem Filterkopf (21, 161, 217) befestigt ist;
wobei die innere Dichtung (29, 132, 166, 216) zwischen der Mutterplatte (30, 131, 163) und dem Filterelement (25, 164) angeordnet ist, das ausgebildet und angeordnet ist, um in Stoßkontakt mit der Lagerfläche (204) angeordnet zu werden;
wobei die äußere Dichtung (31, 167) zwischen dem Filterkopf (21, 161, 217) und der Mutterplatte (30, 131, 163) angeordnet ist, die ausgebildet und angeordnet ist, um in Stoßkontakt mit dem äußeren Flanschabschnitt (197) angeordnet zu werden; und
bei dem der Filterkopf (21, 161, 217) und der Flüssigkeitsfilter (20, 130, 160, 215) ausgebildet und angeordnet sind, um durch Schraubeingriff zwischen der mit einem Außengewinde versehenen äußeren Wand (48, 199, 233) und der Mutterplatte (30, 131, 163) zusammengefügt zu werden, bevor irgendein Kontakt zwischen der Lagerfläche (204) und der inneren Dichtung (29, 132, 166, 216) auftritt, wobei der Kontakt zwischen der Lagerfläche (204) und der inneren Dichtung (29, 132, 166, 216) vor jeglichem Kontakt zwischen der äußeren Dichtung (31, 167) und dem äußeren Flanschabschnitt (197) auftritt.

16. Flüssigkeitsfilter (20, 130, 160, 215), der auf einem Filterkopf (21, 161, 217) befestigt ist, gemäß Anspruch 15, bei dem der äußere Flansch (197) einen ringförmigen Kanal (60, 198) begrenzt, der die äußere Dichtung (31, 167) aufnimmt.

17. Flüssigkeitsfilter (20, 130, 160, 215), der auf einem Filterkopf (21, 161, 217) befestigt ist, gemäß Anspruch 11, Anspruch 12 oder Anspruch 13, bei dem die innere Dichtung (29, 132, 166, 216) eine Vielzahl von sich radial nach außen ausbreitenden Flanschen (65a-65d, 208a-208c) enthält.

18. Flüssigkeitsfilter (20, 160), der auf einem Filterkopf (21, 161) befestigt ist, gemäß Anspruch 12 oder Anspruch 14, bei dem die innere Dichtung (29, 166) eine obere Oberfläche enthält, die eine Vielzahl von Strömungsöffnungen (66a-66d) begrenzt.

19. Einteilige Mutterplatte (30, 131, 163) für aufschraubbaren Filter, zum Bereitstellen einer Befestigungsfläche zwischen einem Befestigungssockel (21, 161, 217) eines Motorblockes und dem Rest eines aufschraubbaren Flüssigkeitsfilters (20, 130, 160, 215) gemäß Anspruch 2 oder irgendeinem der Ansprüche 3 bis 18, wenn rückbezogen auf Anspruch 2, wobei die einteilige Mutterplatte (30, 131, 163) für den aufschraubbaren Filter folgendes aufweist:
einen ersten ringförmigen Wandabschnitt (52), der ausgebildet und angeordnet ist, um an einem äußeren Mantel (27, 162) des aufschraubbaren Flüssigkeitsfilters (20, 130, 160, 215) angebracht zu werden;
einen zweiten ringförmigen Wandabschnitt (70, 136), der ausgebildet und angeordnet ist, um radial innerhalb des ersten ringförmigen Wandabschnittes (52) angeordnet zu werden, wobei der zweite ringförmige Wandabschnitt (70, 136) mit einem Innengewinde versehen ist, um durch Schraubeingriff an einem Befestigungssockel (21, 161, 217) eines Motorblockes befestigt zu werden;
**dadurch gekennzeichnet, daß** ein verbindender ringförmiger Wandabschnitt zwischen dem ersten ringförmigen Wandabschnitt (52) und dem zweiten ringförmigen Wandabschnitt (70, 136) angeordnet ist und frei von jeglichen Strömungseinlaßlöchern ist, wobei der zweite ringförmige Wandabschnitt (70, 136) axial von dem ersten ringförmigen Wandabschnitt (52) beabstandet ist und eine Kante (73, 138) enthält, die angepaßt ist, um einen Teil einer Begrenzung eines Durchganges für den Strom hereinkommenden Öles zu begrenzen, wenn die einteilige Mutterplatte (30, 131, 163) für den aufschraubbaren Filter in den aufschraubbaren Flüssigkeitsfilter (20, 130, 160, 215) derart eingepaßt ist, daß der hereinkommende Ölstrom an der Kante (73, 138) des zweiten ringförmigen Wandabschnittes (70, 136) vorbei oder darüber hinweg geht, und daß der radiale Trennungsabstand zwischen einer äußeren Oberfläche des ersten ringförmigen Wandabschnittes (52) und einer inneren Oberfläche (70a) des zweiten ringförmigen Wandabschnittes (70, 136) 0,5 Zoll (12,7 mm) nicht übersteigt.

20. Einteilige Mutterplatte (30, 131, 163) nach Anspruch 19, bei der der zweite ringförmige Wandabschnitt (70, 136) eine Vielzahl von Abstandszungen (137) enthält, die sich axial weg von dem ersten ringförmigen Wandabschnitt (52) erstrecken.
